# EUROPEAN PATENT APPLICATION

(11) **EP 4 694 122 A1**
(43) Date of publication of application: **11.02.2026**
(21) Application number: 24853219.4
(22) Date of filing: 10.04.2024
(51) Int. Cl.: H04N 19/159

(54) **CODING METHOD, DECODING METHOD AND ELECTRONIC DEVICE**

(30) Priority: 15.08.2023 CN 202311035328
(71) Applicant: Huawei Technologies Co., Ltd., Shenzhen, Guangdong 518129 (CN)
(72) Inventor: SHI, Yibo, Shenzhen, Guangdong 518129 (CN); GE, Yunying, Shenzhen, Guangdong 518129 (CN); WANG, Jing, Shenzhen, Guangdong 518129 (CN)
(74) Representative: Grünecker Patent- und Rechtsanwälte PartG mbB
(86) International application number: PCT/CN2024/087047
(87) International publication number: WO 2025/035803

(57) **Abstract**

This application provides an encoding method, a decoding method, and an electronic device. The method includes: performing motion estimation on a current frame, to obtain a first optical flow; obtaining first optical flow hyperprior information based on feature information of the first optical flow and prior information of the first optical flow; encoding the first optical flow hyperprior information, to obtain a first bitstream; performing probability estimation based on second optical flow hyperprior information and prior information of the first optical flow, to obtain an optical flow probability distribution; performing entropy encoding on the feature information of the first optical flow based on the optical flow probability distribution, to obtain a second bitstream; performing inter prediction on the current frame, to obtain prediction information; determining residual information based on the prediction information and an original picture; and encoding the residual information, to obtain a third bitstream. Compared with the conventional technology in which determined first optical flow hyperprior information is used to determine an optical flow probability distribution of all samples in the current frame, in this application in which the first optical flow hyperprior information is used to determine an optical flow probability distribution of a part of samples in the current frame, bitrate overheads can be reduced.

## Description

This application claims priority to Chinese Patent Application No. 202311035328.2, filed with the China National Intellectual Property Administration on August 15, 2023 and entitled "ENCODING METHOD, DECODING METHOD, AND ELECTRONIC DEVICE", which is incorporated herein by reference in its entirety.

### TECHNICAL FIELD

Embodiments of this application relate to the encoding and decoding field, and in particular, to an encoding method, a decoding method, and an electronic device.

### BACKGROUND

As videos develop from high definition videos to ultra high definition videos, people have higher requirements on video quality. In addition, the high definition video has a higher requirement on a bandwidth and storage. Correspondingly, in consideration of control over the bandwidth, a transmission delay, and storage costs, a requirement for video encoding is increasingly urgent.

An artificial intelligence (Artificial Intelligence, AI) video compression (or referred to as encoding and decoding) algorithm is implemented based on deep learning, and has better compression effect than conventional video compression technologies (for example, H265 and H266).

Because picture frames of video data are continuous in time, there is a small difference between a plurality of adjacent frames. In other words, there is time redundancy between video frames. In view of this, inter encoding may be performed to reduce bitrate overheads. In an inter encoding process of AI video encoding, entropy encoding is usually performed on residual information based on a probability distribution of the residual information, entropy encoding is performed on an optical flow based on an optical flow probability distribution, and information used to determine the probability distribution of the residual information and information used to determine the optical flow probability distribution are encoded. In this way, a decoder side obtains the residual information and the optical flow through decoding for subsequent video reconstruction.

### SUMMARY

In view of this, this application provides an encoding method, a decoding method, and an electronic device. The encoding method and the decoding method can reduce bitrate overheads.

According to a first aspect, an embodiment of this application provides an encoding method. The method includes: performing motion estimation on a current frame, to obtain a first optical flow of the current frame; determining first optical flow hyperprior information of the current frame based on feature information of the first optical flow of the current frame and prior information of the first optical flow of the current frame; encoding the first optical flow hyperprior information of the current frame, to obtain a first bitstream; performing probability estimation based on second optical flow hyperprior information of the current frame and the prior information of the first optical flow of the current frame, to obtain an optical flow probability distribution of the current frame, where the second optical flow hyperprior information of the current frame is obtained through decoding based on the first bitstream; performing entropy encoding on the feature information of the first optical flow of the current frame based on the optical flow probability distribution of the current frame, to obtain a second bitstream; performing inter prediction on a current frame, to obtain prediction information of the current frame; determining residual information of the current frame based on the prediction information of the current frame and an original picture of the current frame; and encoding the residual information of the current frame, to obtain a third bitstream.

For example, the prior information of the first optical flow of the current frame may be experience information (or historical information) that can be obtained before entropy encoding is performed on the feature information of the first optical flow of the current frame, and may be used for subsequent inference and decision-making (for example, the prior information of the first optical flow of the current frame may be used to determine a probability distribution (namely, an optical flow probability distribution) of feature information of a first optical flow of K1 samples in the current frame). For example, the first optical flow hyperprior information of the current frame is used to determine an optical flow probability distribution of K2 samples in the current frame. The current frame may include K samples, K is a positive integer, both K1 and K2 are positive integers less than K, and a union set of the K1 samples and the K2 samples is the K samples included in the current frame. It should be noted that, in a possible manner, there is no intersection set between the K1 samples and the K2 samples. In other words, the K1 samples and the K2 samples may be complementary to each other. K=K1+K2. For example, if the current frame includes 100 samples, and K1=K2=50, an optical flow probability distribution of 50 samples in the 100 samples may be determined by separately using the prior information of the first optical flow of the current frame; and an optical flow probability distribution of the other 50 samples in the 100 samples may be determined by separately using the first optical flow hyperprior information of the current frame. In a possible manner, there is an intersection set between the K1 samples and the K2 samples, and K1+K2 is greater than K. For example, if the current frame includes 100 samples, K1=50, and K2=60, an optical flow probability distribution of 40 samples in the 100 samples may be determined by separately using the prior information of the first optical flow of the current frame; an optical flow probability distribution of other 50 samples in the 100 samples may be determined by separately using the first optical flow hyperprior information of the current frame; and an optical flow probability distribution of the remaining 10 samples in the 100 samples may be determined based on the prior information of the first optical flow of the current frame and the first optical flow hyperprior information of the current frame.

In the conventional technology, first optical flow hyperprior information of a current frame is determined based on feature information of a first optical flow of the current frame, and the determined first optical flow hyperprior information of the current frame is used to determine a probability distribution of feature information of a first optical flow of all samples in the current frame. However, in this application, the first optical flow hyperprior information of the current frame is determined based on the feature information of the first optical flow of the current frame and the prior information of the first optical flow of the current frame. Because the prior information of the first optical flow of the current frame may be used to determine a probability distribution of feature information of a first optical flow of a part of the samples in the current frame, the first optical flow hyperprior information that is of the current frame and that is determined in this application is used to determine information about a probability distribution of feature information of a first optical flow of the other part of the samples in the current frame. It can be learned that, compared with the first optical flow hyperprior information that is of the current frame and that is determined in the conventional technology, the first optical flow hyperprior information that is of the current frame and that is determined in this application has a smaller data amount. Therefore, this application can reduce bitrate overheads.

For example, the prior information of the first optical flow of the current frame may be first determined, and may be used to determine a probability distribution of feature information of a first optical flow of specific samples in the current frame. Then, for information that is in the feature information of the first optical flow of the current frame and that may be used to determine a probability distribution of feature information of a first optical flow of the other samples in the current frame, feature extraction is performed on the information, to obtain the first optical flow hyperprior information of the current frame.

For example, inter prediction may be performed based on a second optical flow of the current frame, to obtain the prediction information of the current frame. The second optical flow may be obtained through decoding based on the second bitstream.

For example, feature extraction may be performed on the first optical flow of the current frame, to obtain the feature information of the first optical flow of the current frame.

For example, the residual information of the current frame may be a first residual of the current frame (the first residual may be a residual between feature information of the original picture of the current frame and the prediction information of the current frame, or a residual between the original picture of the current frame and the prediction information of the current frame), or may be feature information of the first residual (which may be obtained by performing feature extraction on the first residual) of the current frame. This is not limited in this application. This application is described by using an example in which the residual information of the current frame is the feature information of the first residual of the current frame.

It should be noted that motion estimation may be performed on the current frame based on a reference frame corresponding to the current frame, to obtain the first optical flow of the current frame. The first optical flow of the current frame may be understood as a first optical flow of the current frame relative to the corresponding reference frame.

It should be noted that the first optical flow hyperprior information and the second optical flow hyperprior information may be the same or may be different. This is not limited in this application.

It should be noted that, in a possible manner, the third bitstream, the second bitstream, and the first bitstream may be three bitstreams. In a possible manner, the third bitstream, the second bitstream, and the first bitstream are three parts of a same bitstream. In other words, one bitstream carries all of residual information, a first optical flow, and first optical flow hyperprior information. In a possible manner, the third bitstream and the second bitstream are one bitstream, and the first bitstream is another bitstream. In a possible manner, the third bitstream and the first bitstream are one bitstream, and the second bitstream is another bitstream. In a possible manner, the first bitstream and the second bitstream are one bitstream, and the third bitstream is another bitstream. This is not limited in this application.

According to the first aspect, the prior information of the first optical flow of the current frame includes at least one of time domain prior information of the first optical flow of the current frame or spatial domain prior information of the first optical flow of the current frame.

To be specific, the prior information of the first optical flow of the current frame may include only the time domain prior information of the first optical flow of the current frame; or the prior information of the first optical flow of the current frame may include only the spatial domain prior information of the first optical flow of the current frame; or the prior information of the first optical flow of the current frame may include the spatial domain prior information of the first optical flow of the current frame and the time domain prior information of the first optical flow of the current frame.

For example, the time domain prior information of the first optical flow of the current frame may be information related to the first optical flow of the current frame in time domain, and the spatial domain prior information of the first optical flow of the current frame may be information related to the first optical flow of the current frame in spatial domain. In this way, the prior information of the first optical flow of the current frame may be used to determine the probability distribution of the feature information of the first optical flow of the part of the samples in the current frame.

According to any one of the first aspect or the implementations of the first aspect, the time domain prior information of the first optical flow of the current frame includes feature information of a second optical flow of m frames prior to the current frame, where m is a positive integer; and the spatial domain prior information of the first optical flow of the current frame includes feature information of a reconstructed picture of a reference frame corresponding to the current frame.

For example, the m frames prior to the current frame may be a picture frame whose reconstructed picture has a similarity with the original picture of the current frame is greater than a first threshold.

For example, when m=1, the time domain prior information of the first optical flow of the current frame may include the feature information of the second optical flow of the reference frame corresponding to the current frame.

According to any one of the first aspect or the implementations of the first aspect, encoding the residual information of the current frame, to obtain the third bitstream includes: determining first residual hyperprior information of the current frame based on the residual information of the current frame and prior information of the residual information of the current frame; encoding first residual hyperprior information of the current frame, to obtain a fourth bitstream; performing probability estimation based on second residual hyperprior information of the current frame and the prior information of the residual information of the current frame, to obtain a residual probability distribution of the current frame, where the second residual hyperprior information of the current frame is obtained through decoding based on the fourth bitstream; and performing entropy encoding on the residual information of the current frame based on the residual probability distribution of the current frame, to obtain the third bitstream.

For example, the prior information of the residual information of the current frame may be experience information (or historical information) that can be obtained before entropy encoding is performed on the residual information of the current frame, and may be used for subsequent inference and decision-making (for example, the residual information of the current frame may be used to determine a probability distribution (namely, a residual probability distribution) of residual information of K3 samples in the current frame). For example, the first residual information hyperprior information of the current frame is used to determine a residual probability distribution of K4 samples in the current frame. The current frame may include K samples, K is a positive integer, both K3 and K4 are positive integers less than K, and a union set of the K3 samples and the K4 samples is the K samples included in the current frame. It should be noted that, in a possible manner, there is no intersection set between the K3 samples and the K4 samples. In other words, the K3 samples and the K4 samples may be complementary to each other. K=K3+K4. For example, if the current frame includes 100 samples, and K3=K4=50, a residual probability distribution of 50 samples in the 100 samples may be determined by separately using the prior information of the residual information of the current frame; and a residual probability distribution of the other 50 samples in the 100 samples may be determined by separately using the first residual information hyperprior information of the current frame. In a possible manner, there is an intersection set between the K3 samples and the K4 samples, and K3+K4 is greater than K. For example, if the current frame includes 100 samples, K3=50, and K4=60, a residual probability distribution of 40 samples in the 100 samples may be determined by separately using the prior information of the residual information of the current frame; a residual probability distribution of other 50 samples in the 100 samples may be determined by separately using the first residual information hyperprior information of the current frame; and a residual probability distribution of the remaining 10 samples in the 100 samples may be determined based on the prior information of the residual information of the current frame and the first residual hyperprior information of the current frame.

In the conventional technology, first residual hyperprior information of a current frame is determined based on residual information of the current frame, and the determined first residual hyperprior information of the current frame is used to determine a probability distribution (namely, a residual probability distribution) of residual information of all samples in the current frame. However, in this application, the first residual hyperprior information of the current frame is determined based on the residual information of the current frame and the prior information of the residual information of the current frame. Because the prior information of the residual information of the current frame may be used to determine a probability distribution of residual information of a part of the samples in the current frame, the first residual hyperprior information that is of the current frame and that is determined in this application is used to determine information about a probability distribution of residual information of the other part of the samples in the current frame. It can be learned that, compared with the first residual hyperprior information that is of the current frame and that is determined in the conventional technology, the first residual hyperprior information that is of the current frame and that is determined in this application has a smaller data amount. Therefore, bitrate overheads can be further reduced.

It should be noted that the fourth bitstream may be independent of a bitstream including at least one of the first bitstream, the second bitstream, and the third bitstream in any one of the first aspect and the implementations of the first aspect, or may be a part of the bitstream including at least one of the first bitstream, the second bitstream, and the third bitstream in any one of the first aspect and the implementations of the first aspect. This is not limited in this application.

According to any one of the first aspect or the implementations of the first aspect, the prior information of the residual information of the current frame includes at least one of time domain prior information of the residual information of the current frame or spatial domain prior information of the residual information of the current frame.

To be specific, the prior information of the residual information of the current frame may include only the time domain prior information of the residual information of the current frame; or the prior information of the residual information of the current frame may include only the spatial domain prior information of the residual information of the current frame; or the prior information of the residual information of the current frame may include the spatial domain prior information of the residual information of the current frame and the time domain prior information of the residual information of the current frame.

For example, the time domain prior information of the residual information of the current frame may be information related to the residual information of the current frame in time domain, and the spatial domain prior information of the residual information of the current frame may be information related to the residual information of the current frame in spatial domain. In this way, the prior information of the residual information of the current frame may be used to determine the probability distribution of the residual information of the part of the samples in the current frame.

According to any one of the first aspect or the implementations of the first aspect, the time domain prior information of the residual information of the current frame includes residual information of n frames prior to the current frame, where n is a positive integer; and the spatial domain prior information of the residual information of the current frame includes the prediction information of the current frame.

For example, the n frames prior to the current frame may be a picture frame whose reconstructed picture has a similarity with the original picture of the current frame is greater than a second threshold.

For example, the time domain prior information of the residual information of the current frame includes residual information of n frames prior to the current frame, where n is a positive integer. When n is equal to 1, the time domain prior information of the residual information of the current frame may be residual information of the reference frame corresponding to the current frame.

According to any one of the first aspect or the implementations of the first aspect, the method is applied to an AI video encoding framework, and the AI video encoding framework includes a motion estimation module, an entropy estimation module, an entropy encoding module, a prediction module, and a residual encoding module.

The motion estimation module is configured to perform motion estimation on the current frame, to obtain the first optical flow of the current frame.

The entropy estimation module is configured to: determine the first optical flow hyperprior information of the current frame based on the feature information of the first optical flow of the current frame and the prior information of the first optical flow of the current frame; and output the first optical flow hyperprior information of the current frame to the entropy encoding module.

The entropy encoding module is configured to encode the first optical flow hyperprior information of the current frame, to obtain the first bitstream.

The entropy estimation module is further configured to: perform probability estimation based on the second optical flow hyperprior information of the current frame and the prior information of the first optical flow of the current frame, to obtain the optical flow probability distribution of the current frame; and output the optical flow probability distribution to the entropy encoding module.

The entropy encoding module is further configured to perform entropy encoding on the feature information of the first optical flow of the current frame based on the optical flow probability distribution of the current frame, to obtain the second bitstream.

The prediction module is configured to: perform inter prediction on the current frame, to obtain the prediction information of the current frame; and output the prediction information of the current frame to the residual encoding module.

The residual encoding module is configured to determine the residual information of the current frame based on the prediction information of the current frame and the original picture of the current frame; and output the residual information of the current frame to the entropy encoding module.

The entropy encoding module is further configured to encode the residual information of the current frame, to obtain the third bitstream.

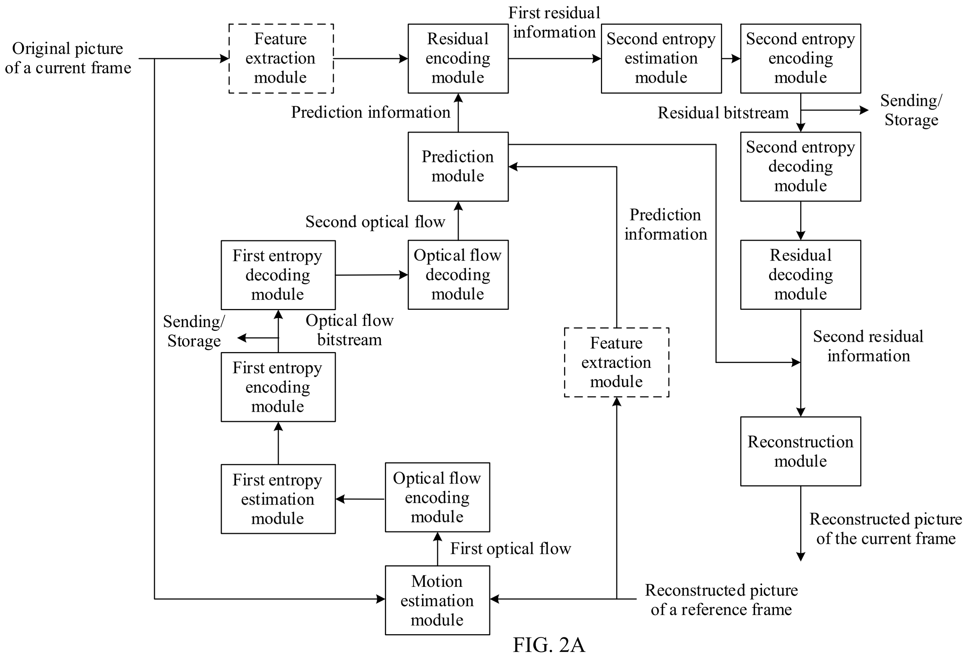

For example, the entropy estimation module may correspond to a first entropy estimation module in FIG. 2A, and the entropy encoding module may correspond to a first entropy encoding module in FIG. 2A.

According to a second aspect, an embodiment of this application provides a decoding method. The method includes: receiving a bitstream, where the bitstream includes a first bitstream, a second bitstream, and a third bitstream; decoding the first bitstream, to obtain second optical flow hyperprior information of a current frame; performing probability estimation based on the second optical flow hyperprior information of the current frame and prior information of a first optical flow of the current frame, to obtain an optical flow probability distribution of the current frame; performing entropy decoding on the second bitstream based on the optical flow probability distribution of the current frame, to obtain feature information of a second optical flow of the current frame; performing inter prediction based on the second optical flow of the current frame, to obtain prediction information of the current frame, where the second optical flow of the current frame is obtained by performing feature restoration based on the feature information of the second optical flow of the current frame; obtaining decoded residual information of the current frame based on the third bitstream; and performing reconstruction based on the prediction information of the current frame and the decoded residual information of the current frame, to obtain a reconstructed picture of the current frame.

According to the second aspect, the prior information of the first optical flow of the current frame includes at least one of time domain prior information of the first optical flow of the current frame or spatial domain prior information of the first optical flow of the current frame.

According to any one of the second aspect or the implementations of the second aspect, the time domain prior information of the first optical flow of the current frame includes feature information of a second optical flow of m frames prior to the current frame, where m is a positive integer; and the spatial domain prior information of the first optical flow of the current frame includes feature information of a reconstructed picture of a reference frame corresponding to the current frame.

According to any one of the second aspect or the implementations of the second aspect, the bitstream further includes a fourth bitstream, and obtaining the residual information of the current frame based on the third bitstream includes: decoding the fourth bitstream, to obtain second residual hyperprior information of the current frame; performing probability estimation based on the second residual hyperprior information of the current frame and prior information of the residual information of the current frame, to obtain a residual probability distribution of the current frame; and performing entropy decoding on the third bitstream based on the residual probability distribution of the current frame, to obtain the decoded residual information of the current frame.

According to any one of the second aspect or the implementations of the second aspect, the prior information of the residual information of the current frame includes at least one of time domain prior information of the decoded residual information of the current frame or spatial domain prior information of the decoded residual information of the current frame.

According to any one of the second aspect or the implementations of the second aspect, the time domain prior information of the decoded residual information of the current frame includes decoded residual information of n frames prior to the current frame, where n is a positive integer; and the spatial domain prior information of the decoded residual information of the current frame includes the prediction information of the current frame.

According to any one of the second aspect or the implementations of the second aspect, the method is applied to an AI video decoding framework, and the AI video decoding framework includes a motion estimation module, an entropy estimation module, an entropy decoding module, a prediction module, and a reconstruction module.

The entropy decoding module is configured to: decode the first bitstream, to obtain the second optical flow hyperprior information of the current frame; and output the second optical flow hyperprior information of the current frame to the entropy estimation module.

The entropy estimation module is configured to: perform probability estimation based on the second optical flow hyperprior information of the current frame and the prior information of the first optical flow of the current frame, to obtain the optical flow probability distribution of the current frame; and output the optical flow probability distribution to the entropy decoding module.

The entropy decoding module is further configured to perform entropy decoding on the second bitstream based on the optical flow probability distribution of the current frame, to obtain the feature information of the second optical flow of the current frame.

The prediction module is configured to: perform inter prediction based on the second optical flow of the current frame, to obtain the prediction information of the current frame; and output the prediction information of the current frame to the reconstruction module.

The entropy decoding module is configured to: obtain the decoded residual information of the current frame based on the third bitstream; and output the decoded residual information of the current frame to the reconstruction module.

The reconstruction module is configured to perform reconstruction based on the prediction information of the current frame and the decoded residual information of the current frame, to obtain the reconstructed picture of the current frame.

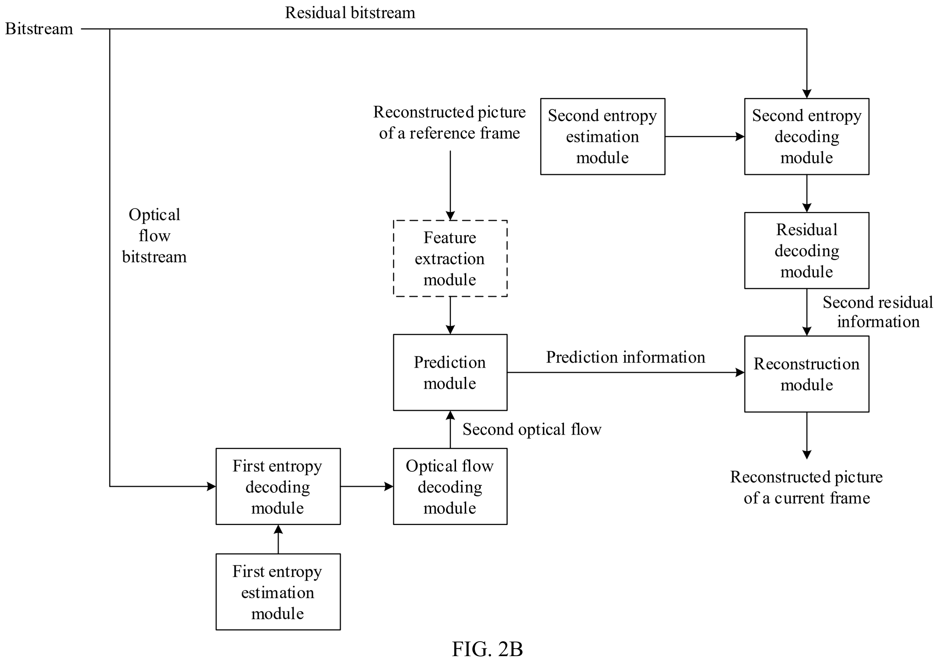

For example, the entropy estimation module may correspond to a first entropy estimation module in FIG. 2B, and the entropy decoding module may correspond to a first entropy decoding module in FIG. 2B.

Any one of the second aspect and the implementations of the second aspect corresponds to any one of the first aspect and the implementations of the first aspect. For technical effect corresponding to any one of the second aspect and the implementations of the second aspect, refer to technical effect corresponding to any one of the first aspect and the implementations of the first aspect. Details are not described herein again.

According to a third aspect, an embodiment of this application further provides an encoding method. The method includes: performing inter prediction on a current frame, to obtain prediction information of the current frame; determining residual information of the current frame based on the prediction information of the current frame and an original picture of the current frame; determining first residual hyperprior information of the current frame based on the residual information of the current frame and prior information of the residual information of the current frame; encoding the first residual hyperprior information of the current frame, to obtain a first bitstream; performing probability estimation based on second residual hyperprior information of the current frame and prior information of the residual information of the current frame, to obtain a residual probability distribution of the current frame, where the second residual hyperprior information of the current frame is obtained through decoding based on the first bitstream; and performing entropy encoding on the residual information of the current frame based on the residual probability distribution of the current frame, to obtain a second bitstream.

For example, the prior information of the residual information of the current frame is used to determine a residual probability distribution of K3 samples in the current frame, and the first residual hyperprior information of the current frame is used to determine a residual probability distribution of K4 samples in the current frame.

In the conventional technology, first residual hyperprior information of a current frame is determined based on residual information of the current frame, and the determined first residual hyperprior information of the current frame is used to determine a probability distribution (namely, a residual probability distribution) of residual information of all samples in the current frame. However, in this application, the first residual hyperprior information of the current frame is determined based on the residual information of the current frame and the prior information of the residual information of the current frame. Because the prior information of the residual information of the current frame may be used to determine a probability distribution of residual information of a part of the samples in the current frame, the first residual hyperprior information that is of the current frame and that is determined in this application is used to determine information about a probability distribution of residual information of the other part of the samples in the current frame. Therefore, compared with the first residual hyperprior information that is of the current frame and that is determined in the conventional technology, the first residual hyperprior information that is of the current frame and that is determined in this application has a smaller data amount. Therefore, bitrate overheads can be further reduced.

It should be noted that the first residual hyperprior information and the second residual hyperprior information may be the same or may be different. This is not limited in this application.

It should be noted that, in a possible manner, the first bitstream and the second bitstream may be two bitstreams. In a possible manner, the first bitstream and the second bitstream are two parts of a same bitstream. In other words, one bitstream carries both residual information and first residual hyperprior information. This is not limited in this application.

According to the third aspect, the prior information of the residual information of the current frame includes at least one of time domain prior information of the residual information of the current frame or spatial domain prior information of the residual information of the current frame.

According to any one of the third aspect or the implementations of the third aspect, the time domain prior information of the residual information of the current frame includes residual information of n frames prior to the current frame, where n is a positive integer; and the spatial domain prior information of the residual information of the current frame includes the prediction information of the current frame.

According to any one of the third aspect or the implementations of the third aspect, the method is applied to an AI video encoding framework, and the AI video encoding framework includes an entropy estimation module, an entropy encoding module, an inter prediction module, and a residual encoding module.

The prediction module is configured to: perform inter prediction on the current frame, to obtain the prediction information of the current frame; and output the prediction information of the current frame to the residual encoding module.

The residual encoding module is configured to: determine the residual information of the current frame based on the prediction information of the current frame and the original picture of the current frame; and output the residual information of the current frame to the entropy estimation module.

The entropy estimation module is configured to: determine the first residual hyperprior information of the current frame based on the residual information of the current frame and the prior information of the residual information of the current frame; and output the first residual hyperprior information of the current frame to the entropy encoding module.

The entropy encoding module is configured to encode the first residual hyperprior information of the current frame, to obtain the first bitstream.

The entropy estimation module is further configured to: perform probability estimation based on the second residual hyperprior information of the current frame and the prior information of the residual information of the current frame, to obtain the residual probability distribution of the current frame; and output the residual probability distribution to the entropy encoding module.

The entropy encoding module is further configured to perform entropy encoding on the residual information of the current frame based on the residual probability distribution of the current frame, to obtain the second bitstream.

For example, the entropy estimation module may correspond to a second entropy estimation module in FIG. 2A, and the entropy encoding module may correspond to a second entropy encoding module in FIG. 2A.

Any one of the third aspect and the implementations of the third aspect corresponds to any one of the first aspect and the implementations of the first aspect. For technical effect corresponding to any one of the third aspect and the implementations of the third aspect, refer to technical effect corresponding to any one of the first aspect and the implementations of the first aspect. Details are not described herein again.

According to a fourth aspect, an embodiment of this application further provides a decoding method. The decoding method includes: receiving a bitstream, where the bitstream includes a first bitstream and a second bitstream; decoding the first bitstream, to obtain second residual hyperprior information of a current frame; performing probability estimation based on the second residual hyperprior information of the current frame and prior information of residual information of the current frame, to obtain a residual probability distribution of the current frame; performing entropy decoding on the second bitstream based on the residual probability distribution of the current frame, to obtain decoded residual information of the current frame; performing inter prediction on the current frame, to obtain prediction information of the current frame; and performing reconstruction based on the prediction information of the current frame and the decoded residual information of the current frame, to obtain a reconstructed picture of the current frame.

According to the fourth aspect, the prior information of the residual information of the current frame includes at least one of time domain prior information of the decoded residual information of the current frame or spatial domain prior information of the residual information of the current frame.

According to any one of the fourth aspect or the implementations of the fourth aspect, the time domain prior information of the decoded residual information of the current frame includes decoded residual information of n frames prior to the current frame, where n is a positive integer; and the spatial domain prior information of the decoded residual information of the current frame includes the prediction information of the current frame.

According to any one of the fourth aspect or the implementations of the fourth aspect, the method is applied to an AI video decoding framework, and the AI video decoding framework includes an inter prediction module, an entropy estimation module, an entropy decoding module, a prediction module, and a reconstruction module.

The entropy decoding module is configured to: decode the first bitstream, to obtain the second residual hyperprior information of the current frame; and output the second residual hyperprior information of the current frame to the entropy estimation module.

The entropy estimation module is configured to: perform probability estimation based on the second residual hyperprior information of the current frame and the prior information of the residual information of the current frame, to obtain the residual probability distribution of the current frame; and output the residual probability distribution to the entropy encoding module.

The entropy encoding module is configured to: perform entropy decoding on the second bitstream based on the residual probability distribution of the current frame, to obtain the decoded residual information of the current frame; and output the decoded residual information of the current frame to the reconstruction module.

The inter prediction module is configured to: perform inter prediction on the current frame, to obtain the prediction information of the current frame; and output the prediction information of the current frame to the reconstruction module.

The reconstruction module is configured to perform reconstruction based on the prediction information of the current frame and the decoded residual information of the current frame, to obtain the reconstructed picture of the current frame.

For example, the entropy estimation module may correspond to a second entropy estimation module in FIG. 2B, and the entropy decoding module may correspond to a second entropy decoding module in FIG. 2B.

Any one of the fourth aspect and the implementations of the fourth aspect corresponds to any one of the first aspect and the implementations of the first aspect. For technical effect corresponding to any one of the fourth aspect and the implementations of the fourth aspect, refer to technical effect corresponding to any one of the first aspect and the implementations of the first aspect. Details are not described herein again.

According to a fifth aspect, an embodiment of this application provides an encoding apparatus, including a memory and a processor. The memory is coupled to the processor. The memory stores program instructions. When the program instructions are executed by the processor, the encoding apparatus is enabled to perform the encoding method according to any one of the first aspect or the possible implementations of the first aspect, or perform the encoding method according to any one of the third aspect or the possible implementations of the third aspect.

Any one of the fifth aspect and the implementations of the fifth aspect corresponds to any one of the first aspect and the implementations of the first aspect, or corresponds to any one of the third aspect and the implementations of the third aspect. For technical effect corresponding to any one of the fifth aspect and the implementations of the fifth aspect, refer to technical effect corresponding to any one of the first aspect and the implementations of the first aspect, or refer to technical effect corresponding to any one of the third aspect and the implementations of the third aspect. Details are not described herein again.

According to a sixth aspect, an embodiment of this application provides a decoding apparatus, including a memory and a processor. The memory is coupled to the processor. The memory stores program instructions. When the program instructions are executed by the processor, the decoding apparatus is enabled to perform the decoding method according to any one of the second aspect or the possible implementations of the second aspect, or perform the decoding method according to any one of the fourth aspect or the possible implementations of the fourth aspect.

Any one of the sixth aspect and the implementations of the sixth aspect corresponds to any one of the second aspect and the implementations of the second aspect, or corresponds to any one of the fourth aspect and the implementations of the fourth aspect. For technical effect corresponding to any one of the sixth aspect and the implementations of the sixth aspect, refer to technical effect corresponding to any one of the second aspect and the implementations of the second aspect, or refer to technical effect corresponding to any one of the fourth aspect and the implementations of the fourth aspect. Details are not described herein again.

According to a seventh aspect, an embodiment of this application provides a coding apparatus, including one or more interface circuits and one or more processors. The one or more processors receive or send data through the one or more interface circuits. When the one or more processors execute computer instructions, the method according to any one of the first aspect or the possible implementations of the first aspect or the method according to any one of the third aspect or the possible implementations of the third aspect is performed.

Any one of the seventh aspect and the implementations of the seventh aspect corresponds to any one of the first aspect and the implementations of the first aspect, or corresponds to any one of the third aspect and the implementations of the third aspect. For technical effect corresponding to any one of the seventh aspect and the implementations of the seventh aspect, refer to technical effect corresponding to any one of the first aspect and the implementations of the first aspect, or refer to technical effect corresponding to any one of the third aspect and the implementations of the third aspect. Details are not described herein again.

According to an eighth aspect, an embodiment of this application provides a coding apparatus, including one or more interface circuits and one or more processors. The one or more processors receive or send data through the one or more interface circuits. When the one or more processors execute computer instructions, the method according to any one of the second aspect or the possible implementations of the second aspect or the method according to any one of the fourth aspect or the possible implementations of the fourth aspect is performed.

Any one of the eighth aspect and the implementations of the eighth aspect corresponds to any one of the second aspect and the implementations of the second aspect, or corresponds to any one of the fourth aspect and the implementations of the fourth aspect. For technical effect corresponding to any one of the eighth aspect and the implementations of the eighth aspect, refer to technical effect corresponding to any one of the second aspect and the implementations of the second aspect, or refer to technical effect corresponding to any one of the fourth aspect and the implementations of the fourth aspect. Details are not described herein again.

According to a ninth aspect, an embodiment of this application provides a computer-readable storage medium. The computer-readable storage medium stores a computer program, and when the computer program is run on a computer or a processor, the computer or the processor is enabled to perform the encoding method according to any one of the first aspect or the possible implementations of the first aspect, or perform the encoding method according to any one of the third aspect or the possible implementations of the third aspect.

Any one of the ninth aspect and the implementations of the ninth aspect corresponds to any one of the first aspect and the implementations of the first aspect, or corresponds to any one of the third aspect and the implementations of the third aspect. For technical effect corresponding to any one of the ninth aspect and the implementations of the ninth aspect, refer to technical effect corresponding to any one of the first aspect and the implementations of the first aspect, or refer to technical effect corresponding to any one of the third aspect and the implementations of the third aspect. Details are not described herein again.

According to a tenth aspect, an embodiment of this application provides a computer-readable storage medium. The computer-readable storage medium stores a computer program, and when the computer program is run on a computer or a processor, the computer or the processor is enabled to perform the encoding method according to any one of the second aspect or the possible implementations of the second aspect, or perform the decoding method according to any one of the fourth aspect or the possible implementations of the fourth aspect.

Any one of the tenth aspect and the implementations of the tenth aspect corresponds to any one of the second aspect and the implementations of the second aspect, or corresponds to any one of the fourth aspect and the implementations of the fourth aspect. For technical effect corresponding to any one of the tenth aspect and the implementations of the tenth aspect, refer to technical effect corresponding to any one of the second aspect and the implementations of the second aspect, or refer to technical effect corresponding to any one of the fourth aspect and the implementations of the fourth aspect. Details are not described herein again.

According to an eleventh aspect, an embodiment of this application provides a computer program product. The computer program product includes computer instructions, and when the computer instructions are executed by a computer or a processor, the computer or the processor is enabled to perform the encoding method according to any one of the first aspect or the possible implementations of the first aspect, or perform the encoding method according to any one of the third aspect or the possible implementations of the third aspect.

Any one of the eleventh aspect and the implementations of the eleventh aspect corresponds to any one of the first aspect and the implementations of the first aspect, or corresponds to any one of the third aspect and the implementations of the third aspect. For technical effect corresponding to any one of the eleventh aspect and the implementations of the eleventh aspect, refer to technical effect corresponding to any one of the first aspect and the implementations of the first aspect, or refer to technical effect corresponding to any one of the third aspect and the implementations of the third aspect. Details are not described herein again.

According to a twelfth aspect, an embodiment of this application provides a computer program product. The computer program product includes computer instructions, and when the computer instructions are executed by a computer or a processor, the computer or the processor is enabled to perform the decoding method according to any one of the second aspect or the possible implementations of the second aspect, or perform the decoding method according to any one of the fourth aspect or the possible implementations of the fourth aspect.

Any one of the twelfth aspect and the implementations of the twelfth aspect corresponds to any one of the second aspect and the implementations of the second aspect, or corresponds to any one of the fourth aspect and the implementations of the fourth aspect. For technical effect corresponding to any one of the twelfth aspect and the implementations of the twelfth aspect, refer to technical effect corresponding to any one of the second aspect and the implementations of the second aspect, or refer to technical effect corresponding to any one of the fourth aspect and the implementations of the fourth aspect. Details are not described herein again.

According to a thirteenth aspect, an embodiment of this application provides a bitstream storage apparatus. The apparatus includes a receiver and at least one storage medium. The receiver is configured to receive a bitstream. The at least one storage medium is configured to store the bitstream. The bitstream is generated according to any one of the first aspect and the implementations of the first aspect, or is generated according to any one of the third aspect and the implementations of the third aspect.

Any one of the thirteenth aspect and the implementations of the thirteenth aspect corresponds to any one of the first aspect and the implementations of the first aspect, or corresponds to any one of the third aspect and the implementations of the third aspect. For technical effect corresponding to any one of the thirteenth aspect and the implementations of the thirteenth aspect, refer to technical effect corresponding to any one of the first aspect and the implementations of the first aspect, or refer to technical effect corresponding to any one of the third aspect and the implementations of the third aspect. Details are not described herein again.

According to a fourteenth aspect, an embodiment of this application provides a bitstream transmission apparatus. The apparatus includes a transmitter and at least one storage medium. The at least one storage medium is configured to store a bitstream. The bitstream is generated according to any one of the first aspect and the implementations of the first aspect, or is generated according to any one of the third aspect and the implementations of the third aspect. The transmitter is configured to: obtain the bitstream from the storage medium, and send the bitstream to a device-side device through a transmission medium.

Any one of the fourteenth aspect and the implementations of the fourteenth aspect corresponds to any one of the first aspect and the implementations of the first aspect, or corresponds to any one of the third aspect and the implementations of the third aspect. For technical effect corresponding to any one of the fourteenth aspect and the implementations of the fourteenth aspect, refer to technical effect corresponding to any one of the first aspect and the implementations of the first aspect, or refer to technical effect corresponding to any one of the third aspect and the implementations of the third aspect. Details are not described herein again.

According to a fifteenth aspect, an embodiment of this application provides a bitstream distribution system. The system includes: at least one storage medium, configured to store at least one bitstream, where the at least one bitstream is generated according to any one of the first aspect and the implementations of the first aspect, or is generated according to any one of the third aspect and the implementations of the third aspect; and a streaming media device, configured to: obtain a target bitstream from the at least one storage medium, and send the target bitstream to a device-side device. The streaming media device includes a content server or a content delivery server.

Any one of the fifteenth aspect and the implementations of the fifteenth aspect corresponds to any one of the first aspect and the implementations of the first aspect, or corresponds to any one of the third aspect and the implementations of the third aspect. For technical effect corresponding to any one of the fifteenth aspect and the implementations of the fifteenth aspect, refer to technical effect corresponding to any one of the first aspect and the implementations of the first aspect, or refer to technical effect corresponding to any one of the third aspect and the implementations of the third aspect. Details are not described herein again.

### BRIEF DESCRIPTION OF DRAWINGS

FIG. 1A is a diagram of an example application framework;
FIG. 1B is a diagram of an example storage framework;
FIG. 1C is a diagram of an example transmission framework;
FIG. 2A is a diagram of a structure of an example AI video encoding framework;
FIG. 2B is a diagram of a structure of an example AI video decoding framework;
FIG. 3A is a diagram of a structure of an example first entropy estimation module;
FIG. 3B is a diagram of an example encoding process;
FIG. 4 is a diagram of an example decoding process;
FIG. 5A is a diagram of a structure of an example second entropy estimation module;
FIG. 5B is a diagram of an example encoding process;
FIG. 6 is a diagram of an example decoding process;
FIG. 7 is a diagram of an example encoding process;
FIG. 8 is a diagram of an example decoding process; and
FIG. 9 is a diagram of a structure of an example apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

In descriptions of embodiments of this application, "a plurality of" means two or more, unless otherwise specified. For example, a plurality of processing units mean two or more processing units, and a plurality of systems mean two or more systems.

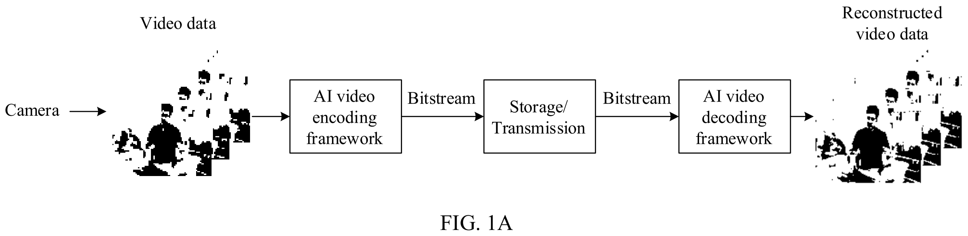

FIG. 1A is a diagram of an example application framework.

As shown in FIG. 1A, for example, a camera (camera/video camera) may perform video capture to obtain video data; and then, an AI video encoding framework may perform AI video encoding on the video data, to obtain a bitstream. Then, the bitstream may be stored locally, or the bitstream may be transmitted to a remote device.

Still as shown in FIG. 1A, in a possible manner, after the bitstream is locally stored, when video playing or video editing needs to be performed, an AI video decoding framework may perform AI video decoding on the bitstream, to obtain reconstructed video data. Then, the reconstructed video data may be played or edited.

Still as shown in FIG. 1A, in a possible manner, after the remote device receives the bitstream, when video playing or video editing needs to be performed, an AI video decoding framework may perform AI video decoding on the bitstream, to obtain reconstructed video data. Then, the reconstructed video data may be played or edited.

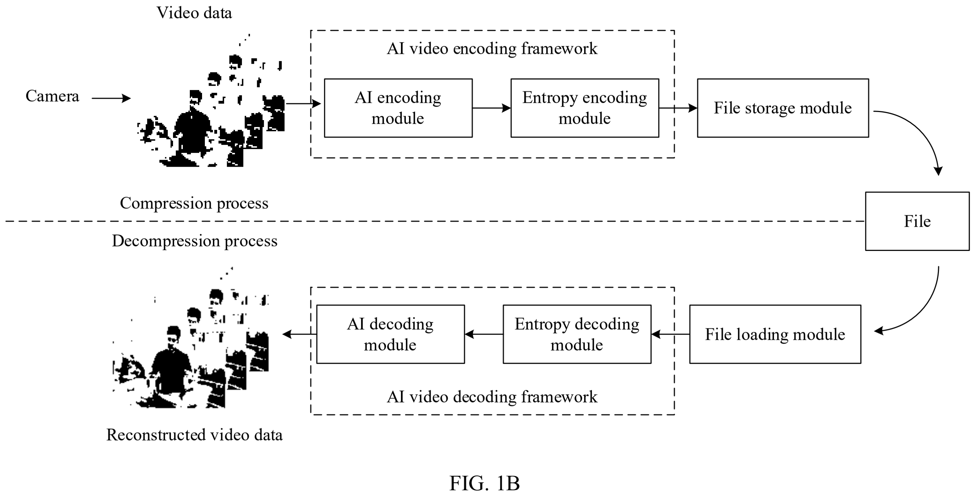

FIG. 1B is a diagram of an example storage framework.

As shown in FIG. 1B, for example, an AI video encoding framework may include an AI encoding module (which may also be referred to as an AI encoding unit) and an entropy encoding module (which may also be referred to as an entropy encoding unit), and an AI video decoding framework may include an AI decoding module (which may also be referred to as an AI decoding unit) and an entropy decoding module (which may also be referred to as an entropy decoding unit). It should be understood that FIG. 1B shows merely an example of this application. The AI video encoding framework and the AI video decoding framework may include more modules than those shown in FIG. 1B. This is not limited in this application.

For example, the AI encoding module and the AI decoding module may be disposed in an embedded neural network processing unit (Neural network Processing Unit, NPU) or a graphics processing unit (Graphics Processing Unit, GPU). For example, the entropy encoding module and the entropy decoding module may be disposed in a central processing unit (Central Processing Unit, CPU). For example, a file storage module and a file loading module may be disposed in the CPU.

As shown in FIG. 1B, for example, after capturing video data, a camera may input the video data into the AI encoding module. Then, the AI encoding module may perform the following processing on each frame of picture in the video data: performing prediction (including intra prediction and inter prediction, and the inter prediction is used as an example for description in this application), determining prediction information, determining residual information based on the prediction information and an original picture, determining a probability distribution of the residual information, and inputting the residual information and the probability distribution of the residual information into an entropy encoding module. Then, the entropy encoding module may perform entropy encoding on the residual information based on the probability distribution of the residual information, to obtain a bitstream; and input the bitstream into the file storage module for storage, to obtain a file.

Still as shown in FIG. 1B, for example, when video playing or video editing needs to be performed, the file loading module may load the file, and then input the bitstream in the file into the entropy decoding module. Then, the entropy decoding module may obtain the probability distribution of the residual information from the AI decoding module, obtain the residual information from the bitstream through entropy decoding based on the probability distribution of the residual information, and output the residual information to the AI decoding module. Then, the AI decoding module may perform inter prediction, to obtain prediction information; and perform reconstruction based on the prediction information and the residual information, to obtain a reconstructed picture. Further, reconstructed video data may be obtained.

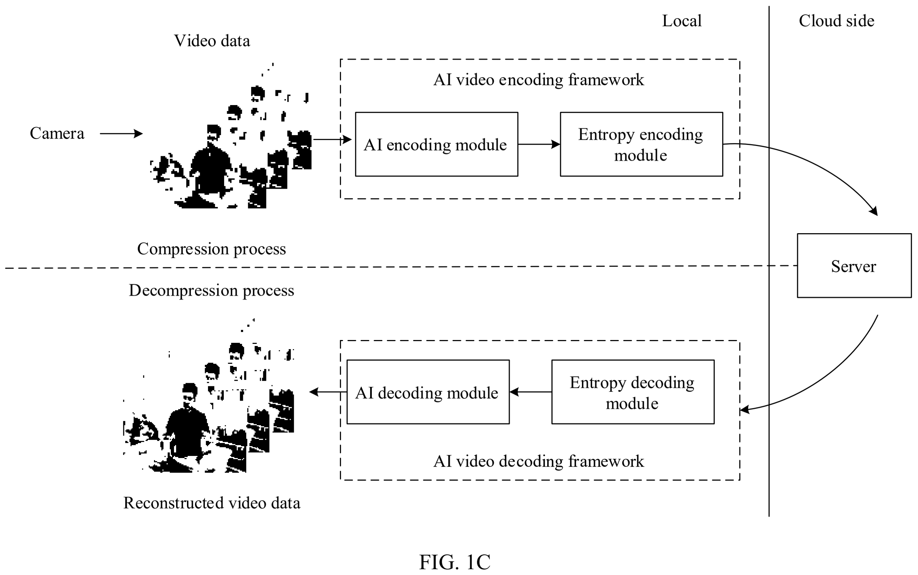

FIG. 1C is a diagram of an example transmission framework.

As shown in FIG. 1C, for example, an encoding process of an encoder side may be as follows:

For example, after capturing video data, a camera may input the video data into an AI encoding module. Then, the AI encoding module may perform the following processing on each frame of picture in the video data: performing prediction (including intra prediction and inter prediction, and the inter prediction is used as an example for description in this application), determining prediction information, determining residual information based on the prediction information and an original picture, determining a probability distribution of the residual information, and inputting the residual information and the probability distribution of the residual information into an entropy encoding module. Then, the entropy encoding module may perform entropy encoding on the residual information based on the probability distribution of the residual information, to obtain a bitstream; and send the bitstream to a cloud server.

Then, the server may send the bitstream to a decoder side. For example, the server may be a single server, or may be a server cluster. This is not limited in this application.

Still as shown in FIG. 1C, for example, after the decoder side receives the bitstream sent by the server, a decoding process may be as follows:

For example, a file loading module may load a file, and then send a bitstream in the file to an entropy decoding module. Then, an AI decoding network may perform inter prediction, to obtain the prediction information. Then, the entropy decoding module may obtain the probability distribution of the residual information from an AI decoding module, obtain the residual information from the bitstream through entropy decoding based on the probability distribution of the residual information, and output the residual information to the AI decoding module. Then, reconstruction is performed based on the prediction information and the residual information, to obtain a reconstructed picture. Further, reconstructed video data may be obtained.

It should be understood that the encoder side may also directly send the bitstream to the decoder side without forwarding by the server. This is not limited in this application.

FIG. 2A is a diagram of a structure of an example AI video encoding framework. In the embodiment of FIG. 2A, an inter encoding process is shown.

As shown in FIG. 2A, for example, an AI encoding module may include a motion estimation module, an optical flow encoding module, a first entropy estimation module, an optical flow decoding module, a prediction module, a feature extraction module, a residual encoding module, a second entropy estimation module, a residual decoding module, and a reconstruction module. It should be understood that the AI encoding module may further include more or fewer modules than those shown in FIG. 2A. This is not limited in this application.

As shown in FIG. 2A, for example, entropy encoding modules may include a first entropy encoding module and a second entropy encoding module.

As shown in FIG. 2A, for example, the AI video encoding framework may further include entropy decoding modules, and the entropy decoding modules may include a first entropy decoding module and a second entropy decoding module.

It should be noted that the feature extraction module in a dashed box in FIG. 2A is an optional module.

It should be noted that the modules included in the AI video encoding framework may be implemented only by using a neural network, or may be implemented by a combination of an algorithm and a neural network. Alternatively, a part of the modules included in the AI video encoding framework may be implemented based only on an algorithm. This is not limited in this application.

Still as shown in FIG. 2A, an example in which inter encoding is performed on a picture frame in video data is used for description. An AI video encoding process may be as follows:

For example, an original picture of a current frame and a reconstructed picture of a reference frame corresponding to the current frame may be input into the motion estimation module. Then, the motion estimation module may perform motion estimation based on the original picture of the current frame and the reconstructed picture of the reference frame, to determine an optical flow (referred to as a first optical flow subsequently) of the current frame; and output the first optical flow of the current frame to the optical flow encoding module. The optical flow encoding module (which may also be referred to as an optical flow feature extraction module) may encode the first optical flow of the current frame (it should be noted that encoding performed by the optical flow encoding module is essentially feature extraction), to obtain feature information (which may also be referred to as a compressed feature of the first optical flow of the current frame) of the first optical flow of the current frame; and output the feature information to the first entropy estimation module.

For example, the first entropy estimation module may perform probability estimation on the feature information of the first optical flow of the current frame, and determine a probability distribution (which may be referred to as an optical flow probability distribution of the current frame subsequently) of the feature information of the first optical flow of the current frame; and then output the feature information of the first optical flow of the current frame and the optical flow probability distribution of the current frame to the first entropy encoding module.

For example, the first entropy encoding module may perform entropy encoding on the feature information of the first optical flow of the current frame based on the optical flow probability distribution of the current frame, to obtain an optical flow bitstream.

For example, the optical flow bitstream may be sent/stored (for example, the optical flow bitstream is sent to a server or a decoder side). In addition, the optical flow bitstream may be output to the first entropy decoding module. In addition, the first entropy estimation module may further output the optical flow probability distribution of the current frame to the first entropy decoding module.

For example, the first entropy decoding module may perform entropy decoding on the optical flow bitstream based on the optical flow probability distribution of the current frame, to obtain the feature information (which may also be referred to as feature information of a second optical flow of the current frame) that is of the first optical flow of the current frame and that is obtained through decoding; and output the feature information of the second optical flow of the current frame to the optical flow decoding module.

For example, the optical flow decoding module may decode the feature information of the second optical flow of the current frame (it should be noted that decoding performed by the optical flow decoding module is essentially feature restoration), to obtain the second optical flow of the current frame; and output the second optical flow of the current frame to the prediction module.

In a possible manner, when the AI encoding module includes the feature extraction module, the reconstructed picture of the reference frame may be input into the feature extraction module. The feature extraction module extracts a feature of the reconstructed picture of the reference frame, to obtain feature information of the reconstructed picture of the reference frame; and outputs the feature information of the reconstructed picture of the reference frame to the prediction module. The prediction module may perform prediction based on the second optical flow of the current frame and the feature information of the reconstructed picture of the reference frame, to obtain the prediction information of the current frame; and output the prediction information of the current frame to the residual encoding module. Correspondingly, the original picture of the current frame may be input into the feature extraction module. The feature extraction module extracts a feature of the original picture of the current frame, to obtain feature information of the original picture of the current frame; and outputs the feature information of the original picture of the current frame to the residual encoding module. The residual encoding module outputs residual information of the current frame (referred to as first residual information of the current frame below) to the second entropy estimation module based on the feature information of the original picture of the current frame and the first prediction information of the current frame. The first residual information of the current frame may be a first residual of the current frame (the first residual may be a residual between the feature information of the original picture of the current frame and the prediction information of the current frame, or may be feature information (the feature information of the first residual may also be referred to as a compressed feature of the first residual, and may be obtained by encoding the first residual by the residual encoding module (it should be noted that encoding performed by the residual encoding module is essentially feature extraction)) of the first residual of the current frame). This is not limited in this application. This application is described by using an example in which the first residual information of the current frame is the feature information of the first residual of the current frame.

In a possible manner, when the AI encoding module does not include the feature extraction module, the reconstructed picture of the reference frame may be directly input into the prediction module. The prediction module performs prediction based on the second optical flow of the current frame and the reconstructed picture of the reference frame, to obtain the prediction information of the current frame; and outputs the prediction information of the current frame to the residual encoding module. Correspondingly, the original picture of the current frame may be directly input into the residual encoding module. The residual encoding module may output the first residual information of the current frame to the second entropy estimation module based on the original picture of the current frame and the prediction information of the current frame.

For example, the second entropy estimation module may perform probability estimation on the first residual information of the current frame, and determine a probability distribution (which may be referred to as a residual probability distribution of the current frame subsequently) of the first residual information of the current frame; and then output the first residual information of the current frame and the residual probability distribution of the current frame to the second entropy encoding module.

For example, the second entropy encoding module may perform entropy encoding on the first residual information of the current frame based on the residual probability distribution of the current frame, to obtain a residual bitstream.

For example, the residual bitstream may be sent/stored (for example, the residual bitstream is sent to a server or a decoder side). In addition, the residual bitstream may be output to the second entropy decoding module. In addition, the second entropy estimation module may further output the residual probability distribution of the current frame to the second entropy decoding module.

For example, the second entropy decoding module may perform entropy decoding on the residual bitstream based on the residual probability distribution of the current frame, to obtain the first residual information that is of the current frame and that is obtained through entropy decoding. When the first residual information of the current frame is the feature information of the first residual of the current frame, the first residual information that is of the current frame and that is obtained through entropy decoding may be output to the residual decoding module.

For example, the residual decoding module may decode the first residual information that is of the current frame and that is obtained through entropy decoding (it should be noted that decoding performed by the residual decoding module is essentially feature restoration), to obtain second residual information of the current frame; and output the second residual information of the current frame to the reconstruction module. It should be noted that when the first residual information of the current frame is the first residual of the current frame, the AI video encoding framework may not include the residual decoding module. In this case, the second residual information of the current frame is the first residual information that is of the current frame and that is obtained through entropy decoding. In addition, in other words, the second residual information of the current frame is obtained by decoding an encoding result (namely, the residual bitstream) of the first residual information of the current frame. When the first residual information of the current frame is the feature information of the first residual of the current frame, decoding in this step includes entropy decoding and feature restoration. When the first residual information of the current frame is the first residual of the current frame, decoding in this step is entropy decoding.

For example, the prediction module may further output the prediction information of the current frame to the reconstruction module. When the AI encoding module includes the feature extraction module, the reconstruction module may perform reconstruction based on the second residual information of the current frame and the prediction information of the current frame, to obtain feature information of a reconstructed picture of the current frame; and then the reconstruction module may perform feature transformation on the feature information of the reconstructed picture of the current frame, to obtain the reconstructed picture of the current frame. When the AI encoding module does not include the feature extraction module, the reconstruction module performs reconstruction based on the second residual information of the current frame and the prediction information of the current frame, to obtain the reconstructed picture of the current frame.

For example, in this application, information used to determine the optical flow probability distribution of the current frame may be further encoded and sent to the decoder side, so that the decoder side determines the optical flow probability distribution, to obtain the second optical flow of the current frame; and information used to determine the residual probability distribution of the current frame is encoded and sent to the decoder side, so that the decoder side determines the residual probability distribution, to obtain the second residual information of the current frame.

FIG. 2B is a diagram of a structure of an example AI video decoding framework.

As shown in FIG. 2B, for example, an AI decoding module may include a first entropy estimation module, a second entropy estimation module, an optical flow decoding module, a prediction module, a feature extraction module, a residual decoding module, and a reconstruction module. It should be understood that the AI encoding module may further include more or fewer modules than those shown in FIG. 2B. This is not limited in this application.

As shown in FIG. 2B, for example, the entropy decoding module may include a first entropy decoding module and a second entropy encoding module.

It should be noted that the feature extraction module in a dashed box in FIG. 2B is an optional module.

It should be noted that the modules included in the AI video decoding framework may be implemented only by using a neural network, or may be implemented by a combination of an algorithm and a neural network. Alternatively, a part of the modules included in the AI video decoding framework may be implemented based only on an algorithm. This is not limited in this application.

Still as shown in FIG. 2B, an example in which inter decoding is performed on a picture frame in video data is used for description. An AI video decoding process may be as follows:

For example, a decoder side may receive a bitstream, and the bitstream may include an optical flow bitstream, a residual bitstream, a bitstream of information used to determine an optical flow probability distribution, and a bitstream of information used to determine a residual probability distribution. The first entropy decoding module may perform entropy decoding on the bitstream of the information used to determine the optical flow probability distribution, to obtain the information used to determine the optical flow probability distribution of the current frame; and output the information used to determine the optical flow probability distribution of the current frame to the first entropy estimation module. Then, the first entropy estimation module may perform probability estimation based on the information used to determine the optical flow probability distribution of the current frame, determine the optical flow probability distribution of the current frame, and output the optical flow probability distribution of the current frame to the first entropy decoding module.

For example, the first entropy decoding module may perform entropy decoding on the optical flow bitstream based on the optical flow probability distribution of the current frame, to obtain feature information of a second optical flow of the current frame; and output the feature information of the second optical flow to the optical flow decoding module.

For example, the optical flow decoding module may perform feature restoration on the feature information of the second optical flow of the current frame, to obtain the second optical flow of the current frame; and output the second optical flow of the current frame to the prediction module.

For example, the second entropy decoding module may perform entropy decoding on the bitstream of the information used to determine the residual probability distribution, to obtain the information used to determine the residual probability distribution of the current frame; and output the information used to determine the residual probability distribution of the current frame to the second entropy estimation module. Then, the second entropy estimation module performs probability estimation based on the information used to determine the residual probability distribution of the current frame, determines the residual probability distribution of the current frame, and outputs the residual probability distribution to the second entropy decoding module.

For example, the second entropy decoding module may perform entropy decoding on the residual bitstream based on the residual probability distribution of the current frame, to obtain first residual information that is of the current frame and that is obtained through entropy decoding; and output the first residual information to the residual decoding module.

For example, the residual decoding module may perform feature restoration on the first residual information that is of the current frame and that is obtained through entropy decoding, to obtain second residual information of the current frame; and output the second residual information of the current frame to the reconstruction module.

In a possible manner, when the AI decoding module includes the feature extraction module, the reconstructed picture of the reference frame may be input into the feature extraction module. The feature extraction module extracts a feature of the reconstructed picture of the reference frame, to obtain feature information of the reconstructed picture of the reference frame; and outputs the feature information of the reconstructed picture of the reference frame to the prediction module. The prediction module may perform prediction based on the second optical flow of the current frame and the feature information of the reconstructed picture of the reference frame, to obtain prediction information of the current frame; and output the prediction information of the current frame to the reconstruction module. Then, the reconstruction module may perform reconstruction based on the second residual information of the current frame and the prediction information of the current frame, to obtain feature information of a reconstructed picture of the current frame; and then the reconstruction module may perform feature transformation (for example, feature restoration) on the feature information of the reconstructed picture of the current frame, to obtain the reconstructed picture of the current frame.

In a possible manner, when the AI decoding module does not include the feature extraction module, the reconstructed picture of the reference frame may be directly input into the prediction module. The prediction module performs prediction based on the second optical flow of the current frame and the reconstructed picture of the reference frame, to obtain the prediction information of the current frame; and outputs the prediction information of the current frame to the reconstruction module. Then, the reconstruction module performs reconstruction based on the second residual information of the current frame and the prediction information of the current frame, to obtain the reconstructed picture of the current frame.

It should be understood that names of the modules included in the AI video encoding framework shown in FIG. 2A and names of the modules included in the AI video decoding framework shown in FIG. 2B are not limited in the present invention. In addition, the modules included in the AI video encoding framework may also be referred to as units, and the modules included in the AI video decoding framework may also be referred to as units.

It should be noted that, in a possible manner, the residual bitstream and the optical flow bitstream are two bitstreams. In a possible manner, the residual bitstream and the optical flow bitstream may be two parts of a same bitstream. In other words, a same bitstream carries the residual information and the first optical flow.

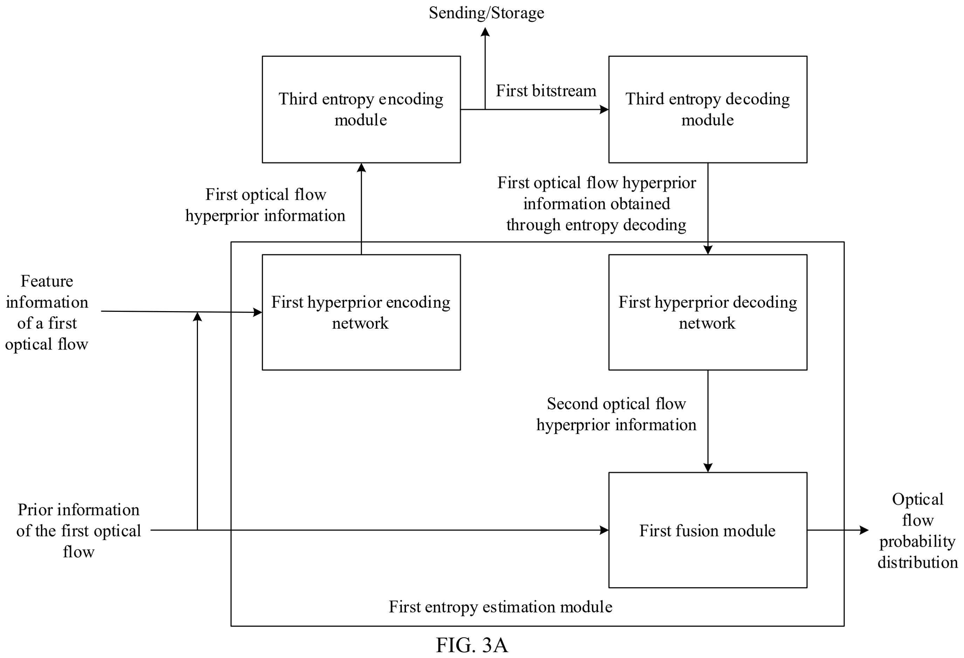

FIG. 3A is a diagram of a structure of an example first entropy estimation module.

As shown in FIG. 3A, for example, the first entropy estimation module includes a first hyperprior encoding network, a first hyperprior decoding network, and a first fusion module. An entropy encoding module in an AI video encoding framework may further include a third entropy encoding module, and the AI video encoding framework and an entropy decoding module in an AI video decoding framework may further include a third entropy decoding module.

The following describes video data encoding and decoding processes based on FIG. 2A, FIG. 2B, and FIG. 3A.

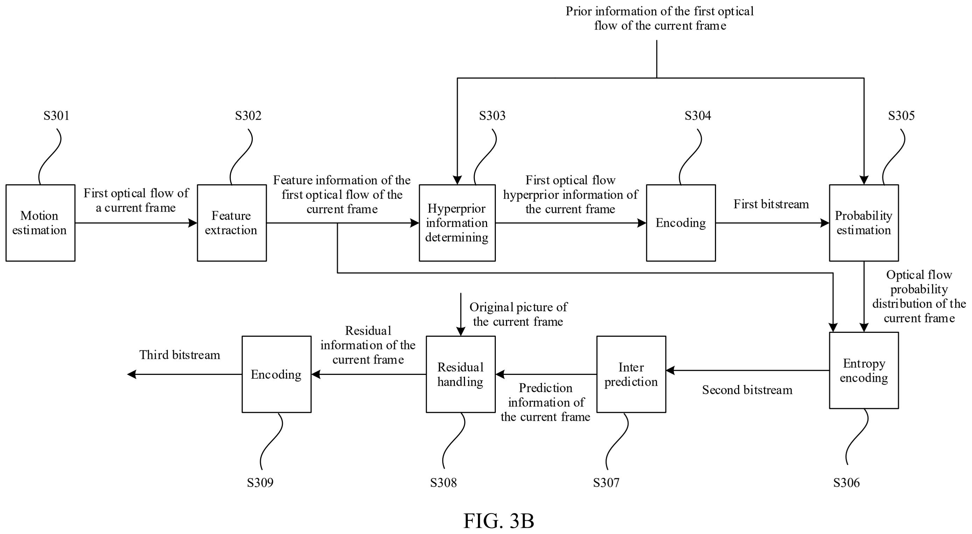

FIG. 3B is a diagram of an example encoding process. In the embodiment of FIG. 3B, an example in which inter decoding is performed on a picture frame in video data is used for description.

S301: Perform motion estimation on a current frame, to obtain a first optical flow of the current frame.

As shown in FIG. 2A, for example, an original picture of the current frame and picture information (a reconstructed picture of a reference frame or feature information of the reconstructed picture of the reference frame) of the reference frame corresponding to the current frame may be input into a motion estimation module, and the motion estimation module invokes a motion estimation network to perform motion estimation, to obtain a first optical flow of the current frame.

S302: Perform feature extraction on the first optical flow of the current frame, to obtain feature information of the first optical flow of the current frame.

Then, the motion estimation module may output the first optical flow of the current frame to an optical flow encoding module, and the optical flow encoding module outputs the feature information of the first optical flow of the current frame to a first entropy estimation module. Then, entropy estimation may be performed on the feature information of the first optical flow of the current frame based on S303 to S305.

S303: Determine first optical flow hyperprior information of the current frame based on the feature information of the first optical flow of the current frame and prior information of the first optical flow of the current frame.

As shown in FIG. 3A, for example, the feature information of the first optical flow of the current frame and the prior information of the first optical flow of the current frame may be input into a first hyperprior encoding network, and the first hyperprior encoding network encodes the feature information of the first optical flow of the current frame and the prior information of the first optical flow of the current frame (it should be noted that encoding performed by the first hyperprior encoding network is essentially feature extraction), to obtain optical flow hyperprior information of the current frame (which is referred to as the first optical flow hyperprior information of the current frame subsequently, where the first optical flow hyperprior information may also be referred to as a first optical flow hyperprior feature). Then, the first hyperprior encoding network may output the first optical flow hyperprior information of the current frame to a third entropy encoding module.

For example, at an encoder side, the prior information of the first optical flow of the current frame may be experience information (or historical information) that can be obtained before entropy encoding is performed on the feature information of the first optical flow of the current frame, and may be used for subsequent inference and decision-making (for example, used to determine a probability distribution (namely, an optical flow probability distribution) of feature information of a first optical flow of K1 samples in the current frame).

For example, the first hyperprior encoding network may determine the prior information of the first optical flow of the current frame, which may be used to determine a probability distribution of feature information of a first optical flow of specific samples in the current frame. Then, for information that is in the feature information of the first optical flow of the current frame and that may be used to determine a probability distribution of feature information of a first optical flow of the other samples in the current frame, feature extraction is performed on the information, to obtain the first optical flow hyperprior information of the current frame. In other words, the first optical flow hyperprior information that is of the current frame and that is obtained through feature extraction is used to determine a probability distribution of feature information of a first optical flow of K2 samples in the current frame. In this way, a data amount of information (namely, the first optical flow hyperprior information) used to determine the optical flow probability distribution can be reduced, thereby reducing bitrate overheads.

The current frame may include K samples, K is a positive integer, both K1 and K2 are positive integers less than K, and a union set of the K1 samples and the K2 samples is the K samples included in the current frame. It should be noted that, in a possible manner, there is no intersection set between the K1 samples and the K2 samples. In other words, the K1 samples and the K2 samples may be complementary to each other. K=K1+K2. For example, if the current frame includes 100 samples, and K1=K2=50, an optical flow probability distribution of 50 samples in the 100 samples may be determined by separately using the prior information of the first optical flow of the current frame; and an optical flow probability distribution of the other 50 samples in the 100 samples may be determined by separately using the first optical flow hyperprior information of the current frame. In a possible manner, there is an intersection set between the K1 samples and the K2 samples, and K1+K2 is greater than K. For example, if the current frame includes 100 samples, K1=50, and K2=60, an optical flow probability distribution of 40 samples in the 100 samples may be determined by separately using the prior information of the first optical flow of the current frame; an optical flow probability distribution of other 50 samples in the 100 samples may be determined by separately using the first optical flow hyperprior information of the current frame; and an optical flow probability distribution of the remaining 10 samples in the 100 samples may be determined based on the prior information of the first optical flow of the current frame and the first optical flow hyperprior information of the current frame.

For example, the prior information of the first optical flow of the current frame includes at least one of time domain prior information of the first optical flow of the current frame or spatial domain prior information of the first optical flow of the current frame. To be specific, the prior information of the first optical flow of the current frame may include only the time domain prior information of the first optical flow of the current frame; or the prior information of the first optical flow of the current frame may include only the spatial domain prior information of the first optical flow of the current frame; or the prior information of the first optical flow of the current frame may include the spatial domain prior information of the first optical flow of the current frame and the time domain prior information of the first optical flow of the current frame.

For example, the time domain prior information of the first optical flow of the current frame may be information related to the first optical flow of the current frame in time domain, and the spatial domain prior information of the first optical flow of the current frame may be information related to the first optical flow of the current frame in spatial domain.

For example, the time domain prior information of the first optical flow of the current frame may include feature information of a second optical flow of m frames prior to the current frame, where m is a positive integer. When m=1, the time domain prior information of the first optical flow of the current frame may include the feature information of the second optical flow of the reference frame corresponding to the current frame.

For example, the spatial domain prior information of the first optical flow of the current frame may include feature information of a reconstructed picture of a reference frame corresponding to the current frame.

S304: Encode the first optical flow hyperprior information of the current frame, to obtain a first bitstream.

For example, the third entropy encoding module may perform entropy encoding on the first optical flow hyperprior information of the current frame, to obtain the first bitstream. The third entropy encoding module may send the first bitstream to a decoder side (or a server) or locally store the first bitstream. In addition, the third entropy encoding module may output the first bitstream to the third entropy decoding module.

S305: Perform probability estimation based on second optical flow hyperprior information of the current frame and the prior information of the first optical flow of the current frame, to obtain an optical flow probability distribution of the current frame, where the second optical flow hyperprior information of the current frame is obtained through decoding based on the first bitstream.

Then, the third entropy decoding module may perform entropy decoding on the first bitstream, to obtain the first optical flow hyperprior information that is of the current frame and that is obtained through entropy decoding; and output the first optical flow hyperprior information that is of the current frame and that is obtained through entropy decoding to a first hyperprior decoding network. Then, the first hyperprior decoding network may decode the first optical flow hyperprior information that is of the current frame and that is obtained through entropy decoding (it should be noted that encoding performed by the first hyperprior decoding network is essentially feature restoration), to obtain the second optical flow hyperprior information (the second optical flow hyperprior information may also be referred to as a second optical flow hyperprior feature) of the current frame; and output the second optical flow hyperprior information of the current frame to a first fusion module. In other words, "decoding" in decoding based on the first bitstream in S305 includes two steps: entropy decoding and feature restoration.

For example, the prior information of the first optical flow of the current frame may be further input into the first fusion module. Then, the first fusion module may perform probability estimation based on the second optical flow hyperprior information of the current frame and the prior information of the first optical flow of the current frame, to obtain the optical flow probability distribution of the current frame; and input the optical flow probability distribution of the current frame to a first entropy encoding module. The optical flow probability distribution of the current frame is also a probability distribution of the feature information of the first optical flow of the current frame.

S306: Perform entropy encoding on the feature information of the first optical flow of the current frame based on the optical flow probability distribution of the current frame, to obtain a second bitstream.

S307: Perform inter prediction on the current frame, to obtain prediction information of the current frame.

For example, inter prediction may be performed based on a second optical flow of the current frame, to obtain the prediction information of the current frame. The second optical flow may be obtained through decoding based on the second bitstream.

It should be noted that "decoding" in decoding based on the second bitstream may include two steps: entropy decoding and feature restoration. For details, refer to the descriptions in the embodiment of FIG. 2A. Details are not described herein again.

S308: Determine residual information of the current frame based on the prediction information of the current frame and the original picture of the current frame.

S309: Encode the residual information of the current frame, to obtain a third bitstream.

For example, for S306 to S309, refer to the descriptions in the embodiment of FIG. 2A. Details are not described herein again. It should be noted that the residual information of the current frame in S308 and S309 is the first residual information of the current frame in the embodiment of FIG. 2A.

For example, S309 may include: determining a residual probability distribution of the current frame; and then performing entropy encoding on the residual information of the current frame based on the residual probability distribution of the current frame, to obtain the third bitstream.

For example, an entropy encoding module in an AI video encoding framework may further include a fifth entropy encoding module and a fifth entropy decoding module, and a second entropy estimation module includes a third hyperprior encoding network, a third hyperprior decoding network, and a third fusion module. Specifically, a process of determining the residual probability distribution of the current frame may be as follows: The residual information of the current frame may be input into the third hyperprior encoding network, to obtain third residual hyperprior information (the third residual hyperprior information may also be referred to as a third residual hyperprior feature) of the current frame; and the third residual hyperprior information of the current frame is input into the fifth entropy encoding module. Then, the fifth entropy encoding module performs entropy encoding on the third residual hyperprior information of the current frame, to obtain a fourth bitstream. In addition, the fourth bitstream is sent to the decoder side (or the server) or locally stored. In addition, the fourth bitstream is output to the fifth entropy decoding module. Then, the fifth entropy decoding module may perform entropy decoding on the fourth bitstream, to obtain the third residual hyperprior information that is of the current frame and that is obtained through entropy decoding; and output the third residual hyperprior information that is of the current frame and that is obtained through entropy decoding to the third hyperprior encoding network. Then, the third hyperprior encoding network performs feature restoration on the third residual hyperprior information that is of the current frame and that is obtained through entropy decoding, to obtain fourth residual hyperprior information (the fourth residual hyperprior information may also be referred to as a fourth residual hyperprior feature) of the current frame; and outputs the fourth residual hyperprior information of the current frame to the third fusion module. Further, prior information of the residual information of the current frame may be input into the third fusion module, and the third fusion module performs probability estimation based on the prior information of the residual information of the current frame and the fourth residual hyperprior information of the current frame, to determine the residual probability distribution of the current frame.

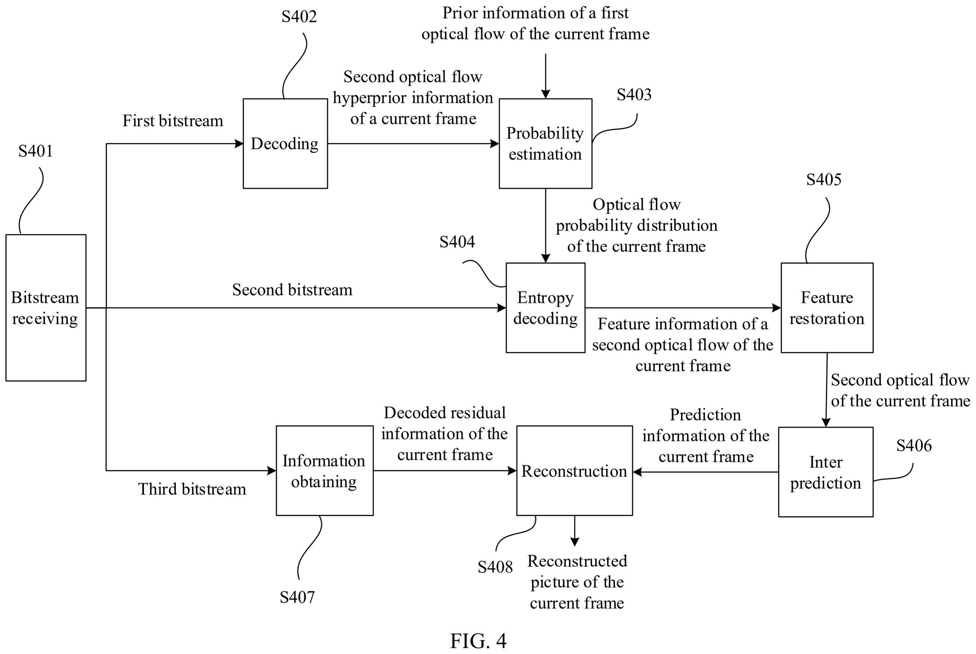

FIG. 4 is a diagram of an example decoding process. The decoding process in the embodiment of FIG. 4 corresponds to the encoding process in the embodiment of FIG. 3B.

S401: Receive a bitstream, where the bitstream includes a first bitstream, a second bitstream, and a third bitstream.

S402: Decode the first bitstream, to obtain second optical flow hyperprior information of a current frame.

As shown in FIG. 3A, for example, the received first bitstream may be input into a third entropy decoding module, and the third entropy decoding module may perform entropy decoding on the first bitstream, to obtain first optical flow hyperprior information that is of a current frame and that is obtained through entropy decoding; and output the first optical flow hyperprior information that is of the current frame and that is obtained through entropy decoding to a first hyperprior decoding network. Then, the first hyperprior decoding network may perform feature restoration on the first optical flow hyperprior information that is of the current frame and that is obtained through entropy decoding, to obtain the second optical flow hyperprior information of the current frame; and output the second optical flow hyperprior information of the current frame to a first fusion module.

S403: Perform probability estimation based on the second optical flow hyperprior information of the current frame and prior information of a first optical flow of the current frame, to obtain an optical flow probability distribution of the current frame.

For example, at a decoder side, the prior information of the first optical flow of the current frame may be information that can be obtained before entropy decoding is performed on the second bitstream (or before feature information that is of the first optical flow of the current frame and that is obtained through entropy decoding is obtained).

For example, the prior information of the first optical flow of the current frame may be further input into the first fusion module. Then, the first fusion module may perform probability estimation based on the second optical flow hyperprior information of the current frame and the prior information of the first optical flow of the current frame, to obtain the optical flow probability distribution of the current frame; and input the optical flow probability distribution of the current frame to a first entropy encoding module.

S404: Perform entropy decoding on the second bitstream based on the optical flow probability distribution of the current frame, to obtain feature information of a second optical flow of the current frame.

S405: Perform feature restoration on the feature information of the second optical flow of the current frame, to obtain the second optical flow of the current frame.

S406: Perform inter prediction based on the second optical flow of the current frame, to obtain prediction information of the current frame, where the second optical flow of the current frame is obtained by performing feature restoration based on the feature information of the second optical flow of the current frame.

S407: Obtain decoded residual information of the current frame based on the third bitstream.

S408: Perform reconstruction based on the prediction information of the current frame and the decoded residual information of the current frame, to obtain a reconstructed picture of the current frame.

For example, for S405 to S408, refer to the descriptions in the embodiment of FIG. 2B. Details are not described herein again. It should be noted that the decoded residual information in S407 and S408 may be second residual information of the current frame in the embodiment of FIG. 2B.

For example, the bitstream received by the decoder side may further include a fourth bitstream, and an entropy decoding module in an AI video decoding framework may further include a fifth entropy decoding module. A process of obtaining the decoded residual information of the current frame based on the third bitstream may be as follows: The fourth bitstream may be input into the fifth entropy decoding module. The fifth entropy decoding module may perform entropy decoding on the fourth bitstream, to obtain third residual hyperprior information that is of the current frame and that is obtained through entropy decoding; and output the third residual hyperprior information that is of the current frame and that is obtained through entropy decoding to a third hyperprior encoding network. Then, the third hyperprior encoding network performs feature restoration on the third residual hyperprior information that is of the current frame and that is obtained through entropy decoding, to obtain fourth residual hyperprior information of the current frame; and outputs the fourth residual hyperprior information of the current frame to a third fusion module. Further, prior information of the residual information of the current frame may be input into the third fusion module, and the third fusion module performs probability estimation based on the prior information of the residual information of the current frame and the fourth residual hyperprior information of the current frame, to determine the residual probability distribution of the current frame. Then, entropy decoding may be performed on the third bitstream based on the residual probability distribution of the current frame, to obtain the decoded residual information of the current frame.

It should be noted that, in the embodiment of FIG. 3A and the embodiment of FIG. 4, the first bitstream may be a bitstream of the first optical flow hyperprior information, the second bitstream may be an optical flow bitstream (corresponding to the optical flow bitstream in FIG. 2A and FIG. 2B), the third bitstream may be a residual bitstream (corresponding to the residual bitstream in FIG. 2A and FIG. 2B), and the fourth bitstream may be a bitstream of the first residual hyperprior information.

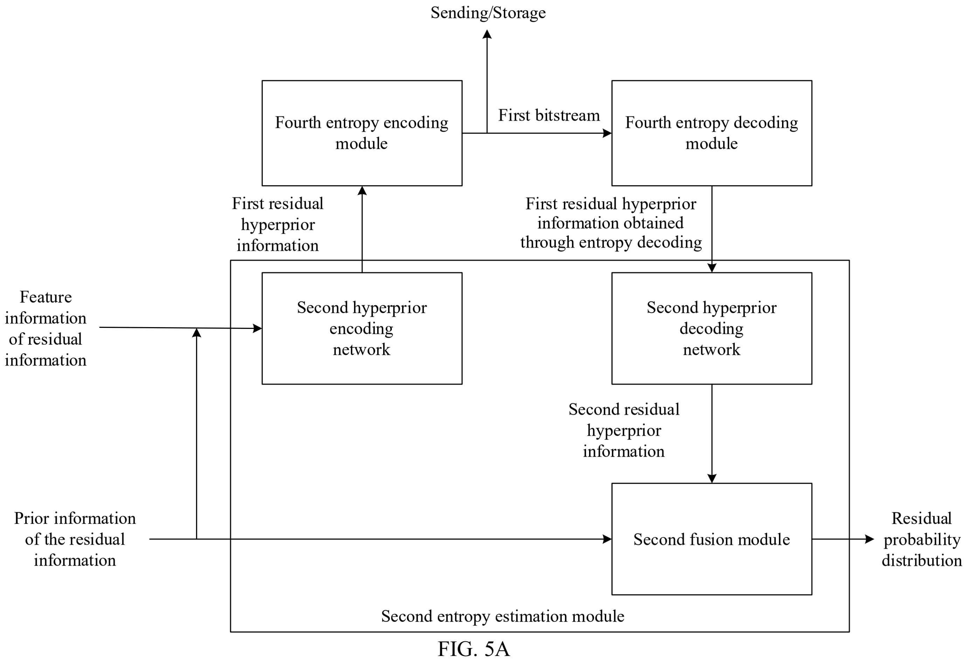

FIG. 5A is a diagram of a structure of an example second entropy estimation module.

As shown in FIG. 5A, for example, the second entropy estimation module further includes a second hyperprior encoding network, a second hyperprior decoding network, and a second fusion module. An entropy encoding module in an AI video encoding framework may further include a fourth entropy encoding module, and the AI video encoding framework and an entropy decoding module in an AI video decoding framework may further include a fourth entropy decoding module.

The following describes video data encoding and decoding processes based on FIG. 2A, FIG. 2B, and FIG. 5A.

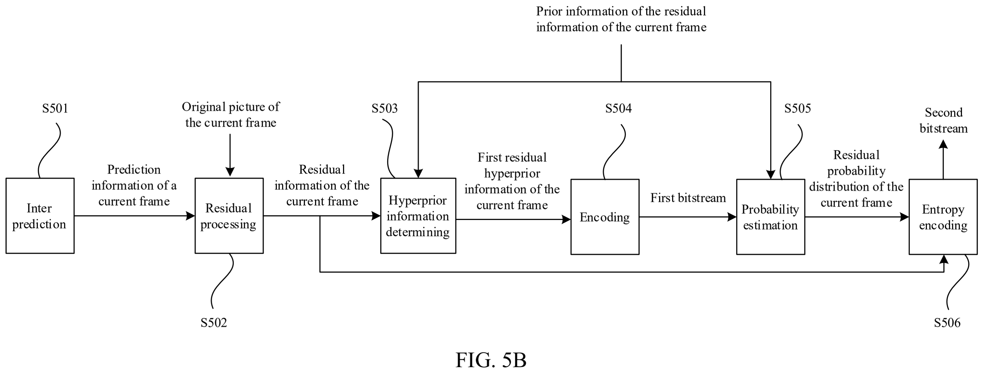

FIG. 5B is a diagram of an example encoding process. In the embodiment of FIG. 5B, an example in which inter decoding is performed on a picture frame in video data is used for description.

S501: Perform inter prediction on a current frame, to obtain prediction information of the current frame.

For example, for an inter prediction process in S501, refer to the descriptions in the embodiment of FIG. 2A. Details are not described herein again. It should be noted that S501 may be performed by an inter prediction module in an AI video encoding framework. The inter prediction module in the AI video encoding framework may include the motion estimation module, the optical flow encoding module, the first entropy estimation module, the optical flow decoding module, and the prediction module in FIG. 2A.

For example, an entropy encoding module in the AI video encoding framework may further include a sixth entropy encoding module and a sixth entropy decoding module. A first entropy estimation network further includes a fourth hyperprior encoding network, a fourth hyperprior decoding network, and a fourth fusion module. Specifically, a process of determining an optical flow probability distribution may be as follows: Feature information of a first optical flow of the current frame may be input into the fourth hyperprior encoding network, to obtain third optical flow hyperprior information (the third optical flow hyperprior information may also be referred to as a third optical flow hyperprior feature) of the current frame; and the third optical flow hyperprior information of the current frame is input into the sixth entropy encoding module. Then, the sixth entropy encoding module performs entropy encoding on the third optical flow hyperprior information of the current frame, to obtain a third bitstream. The third bitstream is sent to a decoder side (or a server) or locally stored. In addition, the third bitstream is output to the sixth entropy decoding module. Then, the sixth entropy decoding module may perform entropy decoding on the third bitstream, to obtain the third optical flow hyperprior information that is of the current frame and that is obtained through entropy decoding; and output the third optical flow hyperprior information that is of the current frame and that is obtained through entropy decoding to the fourth hyperprior encoding network. Then, the fourth hyperprior encoding network performs feature restoration on the third optical flow hyperprior information that is of the current frame and that is obtained through entropy decoding, to obtain fourth optical flow hyperprior information (the fourth optical flow hyperprior information may also be referred to as a fourth optical flow hyperprior feature) of the current frame; and outputs the fourth optical flow hyperprior information of the current frame to the fourth fusion module. In addition, prior information of the first optical flow of the current frame may be further input into the fourth fusion module, and the fourth fusion module performs probability estimation based on the prior information of the first optical flow of the current frame and the fourth optical flow hyperprior information of the current frame, to determine an optical flow probability distribution of the current frame.

Then, entropy encoding may be performed on the feature information of the first optical flow of the current frame based on the optical flow probability distribution of the current frame, to obtain a fourth bitstream.

S502: Determine residual information of the current frame based on the prediction information of the current frame and an original picture of the current frame.

For example, for S502, refer to the descriptions in the embodiment of FIG. 2A. Details are not described herein again.

S503: Determine first residual hyperprior information of the current frame based on the residual information of the current frame and prior information of the residual information of the current frame.

As shown in FIG. 5A, for example, the residual information of the current frame and the prior information of the residual information of the current frame may be input into a second hyperprior encoding network, and the second hyperprior encoding network performs feature extraction on the residual information of the current frame and the prior information of the residual information of the current frame, to obtain the first residual hyperprior information (the first residual hyperprior information may also be referred to as a first residual hyperprior feature) of the current frame. Then, the second hyperprior encoding network may output the first residual hyperprior information of the current frame to the fourth entropy encoding module.

For example, at an encoder side, the prior information of the residual information of the current frame may be experience information (or historical information) that can be obtained before entropy encoding is performed on the residual information of the current frame, and may be used for subsequent inference and decision-making (for example, used to determine a probability distribution (namely, a residual probability distribution) of residual information of K3 samples in the current frame).

For example, the second hyperprior encoding network may determine the prior information of the residual information of the current frame, which may be used to determine a probability distribution of residual information of specific samples in the current frame. Then, for information that is in the residual information of the current frame and that may be used to determine a probability distribution of residual information of the other samples in the current frame, feature extraction is performed on the information, to obtain the first residual hyperprior information of the current frame. In other words, the first residual hyperprior information that is of the current frame and that is obtained through feature extraction is used to determine a probability distribution of residual information of K4 samples in the current frame. In this way, a data amount of information (namely, the first residual hyperprior information) used to determine the residual probability distribution can be reduced, thereby reducing bitrate overheads.

The current frame may include K samples, K is a positive integer, both K3 and K4 are positive integers less than K, and a union set of the K3 samples and the K4 samples is the K samples included in the current frame. It should be noted that, in a possible manner, there is no intersection set between the K3 samples and the K4 samples. In other words, the K3 samples and the K4 samples may be complementary to each other. K=K3+K4. For example, if the current frame includes 100 samples, and K3=K4=50, a residual probability distribution of 50 samples in the 100 samples may be determined by separately using the prior information of the residual information of the current frame; and a residual probability distribution of the other 50 samples in the 100 samples may be determined by separately using the first residual information hyperprior information of the current frame. In a possible manner, there is an intersection set between the K3 samples and the K4 samples, and K3+K4 is greater than K. For example, if the current frame includes 100 samples, K3=50, and K4=60, a residual probability distribution of 40 samples in the 100 samples may be determined by separately using the prior information of the residual information of the current frame; a residual probability distribution of other 50 samples in the 100 samples may be determined by separately using the first residual information hyperprior information of the current frame; and a residual probability distribution of the remaining 10 samples in the 100 samples may be determined based on the prior information of the residual information of the current frame and the first residual hyperprior information of the current frame.

For example, the prior information of the residual information of the current frame includes at least one of time domain prior information of the residual information of the current frame or spatial domain prior information of the residual information of the current frame. To be specific, the prior information of the residual information of the current frame may include only the time domain prior information of the residual information of the current frame; or the prior information of the residual information of the current frame may include only the spatial domain prior information of the residual information of the current frame; or the prior information of the residual information of the current frame may include the spatial domain prior information of the residual information of the current frame and the time domain prior information of the residual information of the current frame.

For example, the time domain prior information of the residual information of the current frame may be information related to the residual information of the current frame in time domain, and the spatial domain prior information of the residual information of the current frame may be information related to the residual information of the current frame in spatial domain.

For example, the time domain prior information of the residual information of the current frame includes residual information of n frames prior to the current frame, where n is a positive integer. When n is equal to 1, the time domain prior information of the residual information of the current frame may be residual information of the reference frame corresponding to the current frame.

For example, the spatial domain prior information of the residual information of the current frame includes the prediction information of the current frame.

S504: Encode the first residual hyperprior information of the current frame, to obtain a first bitstream.

For example, the fourth entropy encoding module may perform entropy encoding on the first residual hyperprior information of the current frame, to obtain the first bitstream. The fourth entropy encoding module may send the first bitstream to a decoder side (or a server) or locally store the first bitstream. In addition, the fourth entropy encoding module may output the first bitstream to the fourth entropy decoding module.

S505: Perform probability estimation based on second residual hyperprior information of the current frame and prior information of the residual information of the current frame, to obtain a residual probability distribution of the current frame, where the second residual hyperprior information of the current frame is obtained through decoding based on the first bitstream.

Then, the fourth entropy decoding module may perform entropy decoding on the first bitstream, to obtain the first residual hyperprior information that is of the current frame and that is obtained through entropy decoding; and output the first residual hyperprior information that is of the current frame and that is obtained through entropy decoding to a first hyperprior decoding network. Then, the first hyperprior decoding network may perform feature restoration on the first residual hyperprior information that is of the current frame and that is obtained through entropy decoding, to obtain second residual hyperprior information (the second residual hyperprior information may also be referred to as a second residual hyperprior feature) of the current frame; and outputs the second residual hyperprior information of the current frame to the second fusion module. In other words, "decoding" in decoding based on the first bitstream in S505 includes two steps: entropy decoding and feature restoration.

For example, the prior information of the residual information of the current frame may be further input into the second fusion module. Then, the second fusion module may perform probability estimation based on the second residual hyperprior information of the current frame and the prior information of the residual information of the current frame, to obtain the residual probability distribution of the current frame; and input the residual probability distribution of the current frame to a second entropy encoding module. The residual probability distribution of the current frame is also the probability distribution of the residual information of the current frame.

S506: Perform entropy encoding on the residual information of the current frame based on the residual probability distribution of the current frame, to obtain a second bitstream.

For example, for S506, refer to the descriptions in the embodiment of FIG. 2A. Details are not described herein again.

It should be noted that the residual information of the current frame in S502, S503, S505, and S506 is the first residual information of the current frame in FIG. 2A.

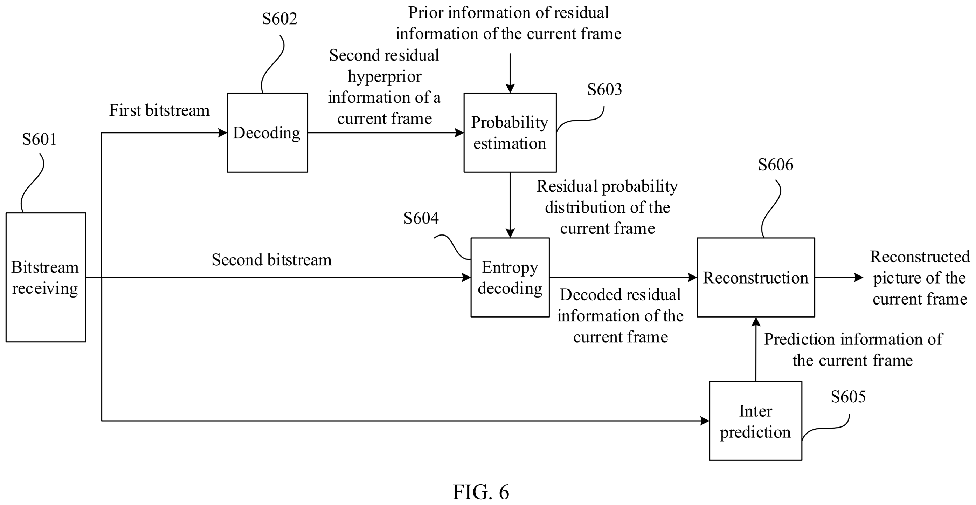

FIG. 6 is a diagram of an example decoding process. The decoding process in FIG. 6 corresponds to the encoding process in FIG. 5B.

S601: Receive a bitstream, where the bitstream includes a first bitstream and a second bitstream.

S602: Decode the first bitstream, to obtain second residual hyperprior information of a current frame.

For example, the first bitstream may be input into a fourth entropy decoding module, and the fourth entropy decoding module may perform entropy decoding on the first bitstream, to obtain first residual hyperprior information that is of the current frame and that is obtained through entropy decoding; and output the first residual hyperprior information that is of the current frame and that is obtained through entropy decoding to a second hyperprior decoding network. Then, the second hyperprior decoding network may perform feature restoration on the first residual hyperprior information that is of the current frame and that is obtained through entropy decoding, to obtain the second residual hyperprior information of the current frame; and output the second residual hyperprior information of the current frame to a second fusion module.

S603: Perform probability estimation based on the second residual hyperprior information of the current frame and prior information of residual information of the current frame, to obtain a residual probability distribution of the current frame.

For example, the prior information of the residual information of the current frame may be further input into the second fusion module. Then, the second fusion module may perform probability estimation based on the second residual hyperprior information of the current frame and the prior information of the residual information of the current frame, to obtain the residual probability distribution of the current frame; and input the residual probability distribution of the current frame to a second entropy encoding module. The residual probability distribution of the current frame is also the probability distribution of the residual information of the current frame.

S604: Perform entropy decoding on the second bitstream based on the residual probability distribution of the current frame, to obtain decoded residual information of the current frame.

Then, the second entropy encoding module may perform entropy decoding on the second bitstream based on the residual probability distribution of the current frame, to obtain the decoded residual information of the current frame.

S605: Perform inter prediction on the current frame, to obtain prediction information of the current frame.

For example, a bitstream received by a decoder side further includes a third bitstream and a fourth bitstream. An entropy decoding module in an AI video decoding framework may further include a sixth entropy decoding module.

For example, the third bitstream may be output to the sixth entropy decoding module, and the sixth entropy decoding module may perform entropy decoding on the third bitstream, to obtain third optical flow hyperprior information that is of the current frame and that is obtained through entropy decoding; and output the third optical flow hyperprior information that is of the current frame and that is obtained through entropy decoding to a fourth hyperprior encoding network. Then, the fourth hyperprior encoding network performs feature restoration on the third optical flow hyperprior information that is of the current frame and that is obtained through entropy decoding, to obtain fourth optical flow hyperprior information of the current frame; and outputs the fourth optical flow hyperprior information of the current frame to a fourth fusion module. In addition, prior information of feature information of a first optical flow of the current frame may be input into the fourth fusion module, and the fourth fusion module performs probability estimation based on the prior information of the feature information of the first optical flow of the current frame and the fourth optical flow hyperprior information of the current frame, to determine an optical flow probability distribution of the current frame; and inputs the optical flow probability distribution of the current frame to a first entropy decoding module. Then, the first entropy decoding module performs entropy decoding on the fourth bitstream, to obtain the feature information that is of the first optical flow of the current frame and that is obtained through entropy decoding; and inputs the feature information that is of the first optical flow of the current frame and that is obtained through entropy decoding to an optical flow decoding module. The optical flow decoding module performs feature restoration on the feature information that is of the first optical flow of the current frame and that is obtained through entropy decoding, to obtain a second optical flow of the current frame. Then, prediction is performed based on the second optical flow of the current frame and picture information of a reference frame, to obtain the prediction information of the current frame. For details, refer to the descriptions in FIG. 2B. Details are not described herein again.

For example, S605 may be performed by an inter prediction module in the AI video decoding framework. The inter prediction module in the AI video decoding framework may include the first entropy estimation module, the optical flow decoding module, and the prediction module in FIG. 2B.

S606: Perform reconstruction based on the prediction information of the current frame and the decoded residual information of the current frame, to obtain a reconstructed picture of the current frame.

For example, for S606, refer to the descriptions in FIG. 2B. Details are not described herein again. It should be noted that the decoded residual information in S603, S604, and S606 is the second residual information of the current frame in FIG. 2B.

It should be noted that, in the embodiment of FIG. 5A and the embodiment of FIG. 6, the first bitstream may be a bitstream of the first residual hyperprior information, the second bitstream may be a residual bitstream (corresponding to the residual bitstream in FIG. 2A and FIG. 2B), the third bitstream may be a bitstream of the first optical flow hyperprior information, and the fourth bitstream may be an optical flow bitstream (corresponding to the optical flow bitstream in FIG. 2A and FIG. 2B).

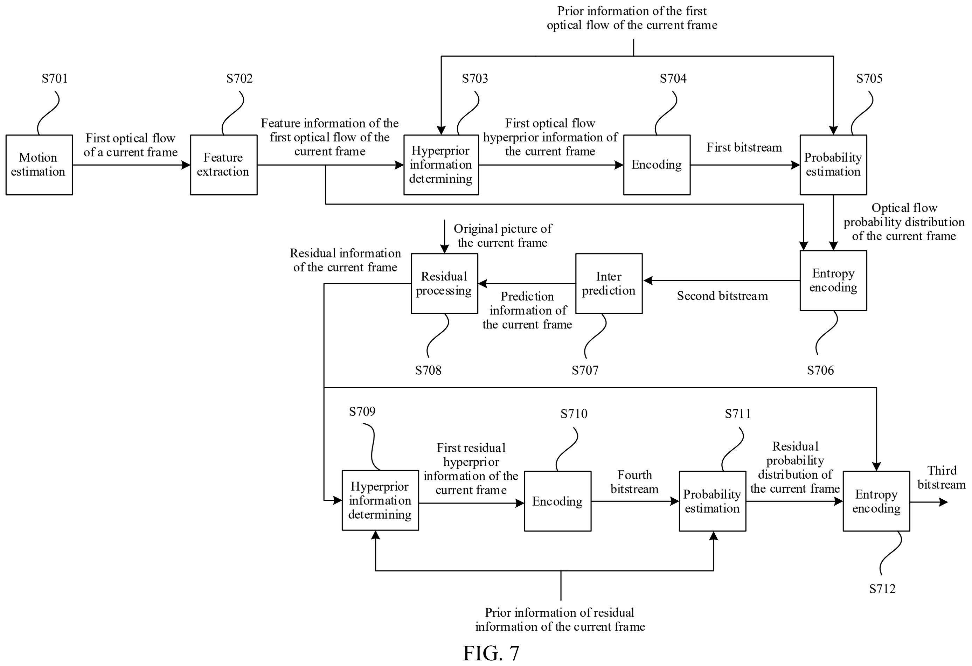

FIG. 7 is a diagram of an example encoding process.

S701: Perform motion estimation on a current frame, to obtain a first optical flow of the current frame.

S702: Perform feature extraction on the first optical flow of the current frame, to obtain feature information of the first optical flow of the current frame.

S703: Determine first optical flow hyperprior information of the current frame based on the feature information of the first optical flow of the current frame and prior information of the first optical flow of the current frame.

S704: Encode the first optical flow hyperprior information of the current frame, to obtain a first bitstream.

S705: Perform probability estimation based on second optical flow hyperprior information of the current frame and the prior information of the first optical flow of the current frame, to obtain an optical flow probability distribution of the current frame, where the second optical flow hyperprior information of the current frame is obtained through decoding based on the first bitstream.

S706: Perform entropy encoding on the feature information of the first optical flow of the current frame based on the optical flow probability distribution, to obtain a second bitstream.

S707: Perform inter prediction on the current frame, to obtain prediction information of the current frame.

S708: Determine residual information of the current frame based on the prediction information of the current frame and an original picture of the current frame.

S709: Determine first residual hyperprior information of the current frame based on the residual information of the current frame and prior information of the residual information of the current frame.

S710: Encode the first residual hyperprior information of the current frame, to obtain a fourth bitstream.

S711: Perform probability estimation based on second residual hyperprior information of the current frame and the prior information of the residual information of the current frame, to obtain a residual probability distribution of the current frame, where the second residual hyperprior information of the current frame is obtained through decoding based on the fourth bitstream.

S712: Perform entropy encoding on the residual information of the current frame based on the residual probability distribution of the current frame, to obtain a third bitstream.

For example, for S701 to S712, refer to the descriptions in the embodiment of FIG. 3B and the embodiment of FIG. 5B. Details are not described herein again.

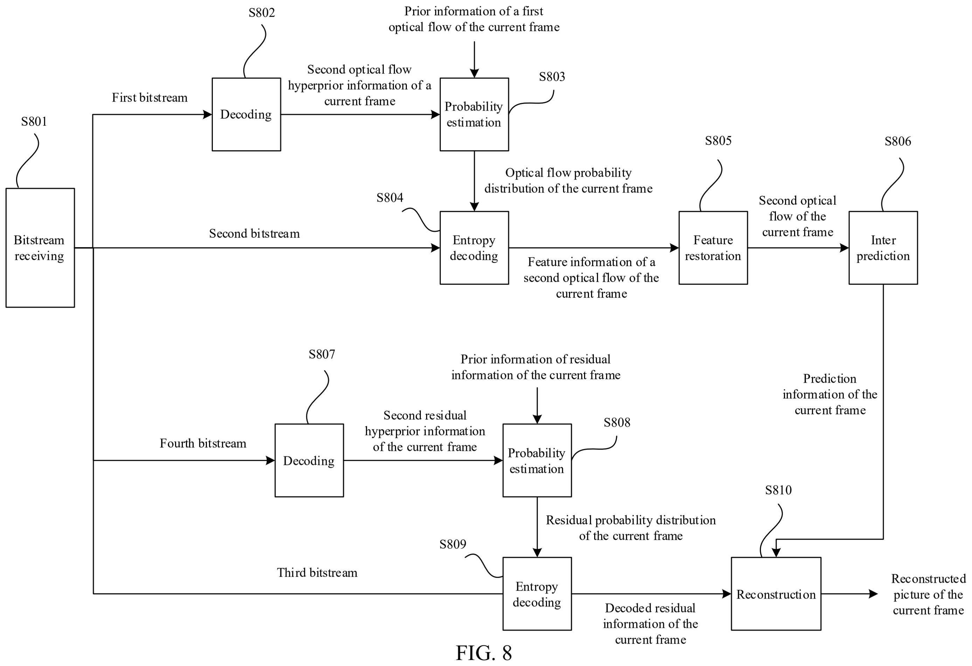

FIG. 8 is a diagram of an example decoding process. The decoding process in the embodiment of FIG. 8 corresponds to the encoding process in the embodiment of FIG. 7.

S801: Receive a bitstream, where the bitstream includes a first bitstream, a second bitstream, and a third bitstream.

S802: Decode the first bitstream, to obtain second optical flow hyperprior information of a current frame.

S803: Perform probability estimation based on the second optical flow hyperprior information of the current frame and prior information of a first optical flow of the current frame, to obtain an optical flow probability distribution of the current frame.

S804: Perform entropy decoding on the second bitstream based on the optical flow probability distribution of the current frame, to obtain feature information of a second optical flow of the current frame.

S805: Perform feature restoration on the feature information of the second optical flow of the current frame, to obtain the second optical flow of the current frame.

S806: Perform inter prediction based on the second optical flow of the current frame, to obtain prediction information of the current frame, where the second optical flow of the current frame is obtained by performing feature restoration based on the feature information of the second optical flow of the current frame.

S807: Decode a fourth bitstream, to obtain second residual hyperprior information of the current frame.

S808: Perform probability estimation based on the second residual hyperprior information of the current frame and prior information of residual information of the current frame, to obtain a residual probability distribution of the current frame.

S809: Perform entropy decoding on the third bitstream based on the residual probability distribution of the current frame, to obtain decoded residual information of the current frame.

S810: Perform reconstruction based on the prediction information of the current frame and the decoded residual information of the current frame, to obtain a reconstructed picture of the current frame.

For example, for S801 to S810, refer to the descriptions in the embodiment of FIG. 4 and the embodiment of FIG. 6. Details are not described herein again.

It should be noted that, in the embodiment of FIG. 7 and the embodiment of FIG. 8, the first bitstream may be a bitstream of first optical flow hyperprior information, the second bitstream may be an optical flow bitstream (corresponding to the optical flow bitstream in FIG. 2A and FIG. 2B), the third bitstream may be a residual bitstream (corresponding to the residual bitstream in FIG. 2A and FIG. 2B), and the fourth bitstream may be a bitstream of first residual hyperprior information.

In the following, the encoding method in the embodiment of FIG. 7, the decoding method in the embodiment of FIG. 8, a conventional encoding/decoding method (for example, H266) in the conventional technology, and an AI video encoding/decoding method in the conventional technology are tested by using a test set, to compare compression performance of the encoding method in the embodiment of FIG. 7 and the decoding method in the embodiment of FIG. 8 in this application and the AI video encoding/decoding method in the conventional technology.

For example, there are five test sets: two 4k test sets (a motion type of one 4K (A1) test set is a complex motion type, and a motion type of the other 4K test set (A2) is a simple motion type), a 1080p test set, an 832*480 test set (target object motion), and a 720p test set (conference video). A peak signal to noise ratio (Peak Signal to Noise Ratio, PSNR) of the encoding method in the embodiment of FIG. 7 and the decoding method in the embodiment of FIG. 8 in this application relative to H266 and a PSNR of the AI video encoding/decoding method in the conventional technology relative to H266 may be shown in Table 1.

**Table 1**

| | PSNR of an AI video encoding/decoding method in the conventional technology relative to H266 | | | | PSNR of the encoding method in the embodiment of FIG. 7 and the decoding method in the embodiment of FIG. 8 in this application relative to H266 | | | |
|---|---|---|---|---|---|---|---|---|
| | Y-PSNR | U-PSNR | V-PSNR | YUV-PSNR | Y-PSNR | U-PSNR | V-PSNR | YUV-PSNR |
| 4K (A1) | 16.19% | 311.47% | 61.52% | 34.29% | 3.10% | 258.97% | 63.67% | 23.71% |
| 4K (A2) | -6.43% | 63.57% | 92.88% | 6.32% | -13.16% | -98.84% | 121.09% | 3.21% |
| 1080p | -6.95% | 37.17% | 18.38% | -1.36% | -11.87% | -80.55% | 63.23% | -0.89% |
| 832*480 | -6.45% | 1.03% | 16.79% | -3.62% | -4.08% | -16.75% | 31.37% | 1.87% |
| 720p | -2.84% | 58.68% | 20.90% | 5.12% | -2.82% | -88.97% | 62.23% | 11.61% |
| Average value | -2.21% | 82.89% | 38.05% | 6.44% | -6.35% | 100.56% | 72.37% | -6.59% |

As shown in Table 1, Y-PSNR represents a PSNR of a Y component, U-PSNR represents a PSNR of a U component, and V-PSNR represents a PSNR of a V component.

It should be noted that a picture included in video data used for testing in the test set is a YUV420 picture. Y component:U component:V component=8:1:1. Therefore, only Y-PSNR needs to be focused om in Table 1. As shown in Table 1, compared with the AI video encoding method in the conventional technology, the encoding method in the embodiment of FIG. 7 and the decoding method in the embodiment of FIG. 8 in this application which are used for encoding and decoding, compression effect can be improved. That is, quality of a reconstructed picture is higher at a same bitrate; or a bitrate is lower in a case of same quality.

In addition, because a scale of feature information of a first optical flow, residual information, and a hyperprior encoding network is small, an increased calculation amount is small, and decoding complexity of a decoder side is not increased.

It should be noted that, in the foregoing embodiments, a fourth bitstream, a third bitstream, a second bitstream, and a first bitstream may be four bitstreams. In a possible manner, a fourth bitstream, a third bitstream, a second bitstream, and a first bitstream are four parts of a same bitstream. In other words, one bitstream carries residual information, a first optical flow, first optical flow hyperprior information, and first residual hyperprior information. In a possible manner, any two of a fourth bitstream, a third bitstream, a second bitstream, and a first bitstream may form one bitstream. In this way, the fourth bitstream, the third bitstream, the second bitstream, and the first bitstream may form two bitstreams. In a possible manner, any three of a fourth bitstream, a third bitstream, a second bitstream, and a first bitstream may form one bitstream. In this way, the fourth bitstream, the third bitstream, the second bitstream, and the first bitstream may form two bitstreams.

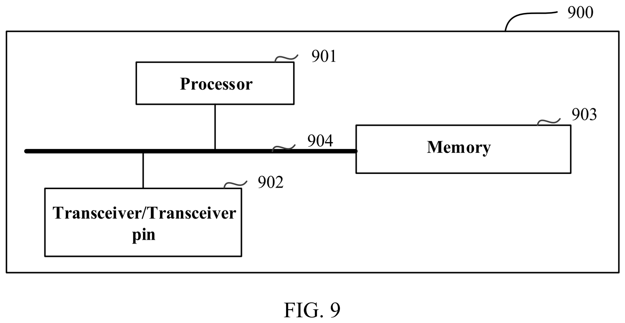

In an example, FIG. 9 is a block diagram of an apparatus 900 according to an embodiment of this application. The apparatus 900 may include a processor 901 and a transceiver/transceiver pin 902, and optionally further includes a memory 903.

Components of the apparatus 900 are coupled together through a bus 904. In addition to a data bus, the bus 904 further includes a power bus, a control bus, and a status signal bus. However, for clarity of description, various buses are referred to as the bus 904 in the figure.

Optionally, the memory 903 may be configured to store instructions in the foregoing method embodiments. The processor 901 may be configured to execute the instructions in the memory 903, control a receive pin to receive a signal, and control a transmit pin to send a signal.

The apparatus 900 may be the electronic device in the foregoing method embodiments or a chip of the electronic device.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data through the one or more interface circuits. When the one or more processors execute computer instructions, the foregoing related method steps are performed to implement the method in the foregoing embodiments. The interface circuit is a transceiver/transceiver pin 902.

An embodiment further provides a computer-readable storage medium. The computer-readable storage medium stores computer instructions. When the computer instructions are run on an electronic device, the electronic device is enabled to perform the foregoing related method steps, to implement the methods in the foregoing embodiments.

An embodiment further provides a computer program product. The computer program product includes computer instructions, and when the computer instructions are executed by a computer or a processor, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The electronic device, the computer-readable storage medium, the computer program product, or the chip provided in embodiments is configured to perform the corresponding method provided above. Therefore, for beneficial effect that can be achieved, refer to beneficial effect in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented according to requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical functional division and may be other division in actual implementations. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on an actual requirement, to achieve the objectives of the solutions of embodiments..

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. An encoding method, wherein the method comprises:
performing motion estimation on a current frame, to obtain a first optical flow of the current frame;
determining first optical flow hyperprior information of the current frame based on feature information of the first optical flow of the current frame and prior information of the first optical flow of the current frame;
encoding the first optical flow hyperprior information of the current frame, to obtain a first bitstream;
performing probability estimation based on second optical flow hyperprior information of the current frame and the prior information of the first optical flow of the current frame, to obtain an optical flow probability distribution of the current frame, wherein the second optical flow hyperprior information of the current frame is obtained through decoding based on the first bitstream;
performing entropy encoding on the feature information of the first optical flow of the current frame based on the optical flow probability distribution of the current frame, to obtain a second bitstream;
performing inter prediction on the current frame, to obtain prediction information of the current frame;
determining residual information of the current frame based on the prediction information of the current frame and an original picture of the current frame; and
encoding the residual information of the current frame, to obtain a third bitstream.

2. The method according to claim 1, wherein
the prior information of the first optical flow of the current frame comprises at least one of time domain prior information of the first optical flow of the current frame or spatial domain prior information of the first optical flow of the current frame.

3. The method according to claim 2, wherein
the time domain prior information of the first optical flow of the current frame comprises feature information of a second optical flow of m frames prior to the current frame, wherein m is a positive integer; and
the spatial domain prior information of the first optical flow of the current frame comprises feature information of a reconstructed picture of a reference frame corresponding to the current frame.

4. The method according to any one of claims 1 to 3, wherein encoding the residual information of the current frame, to obtain the third bitstream comprises:
determining first residual hyperprior information of the current frame based on the residual information of the current frame and prior information of the residual information of the current frame;
encoding first residual hyperprior information of the current frame, to obtain a fourth bitstream;
performing probability estimation based on second residual hyperprior information of the current frame and the prior information of the residual information of the current frame, to obtain a residual probability distribution of the current frame, wherein the second residual hyperprior information of the current frame is obtained through decoding based on the fourth bitstream; and
performing entropy encoding on the residual information of the current frame based on the residual probability distribution of the current frame, to obtain the third bitstream.

5. The method according to claim 4, wherein
the prior information of the residual information of the current frame comprises at least one of time domain prior information of the residual information of the current frame or spatial domain prior information of the residual information of the current frame.

6. The method according to claim 5, wherein
the time domain prior information of the residual information of the current frame comprises residual information of n frames prior to the current frame, wherein n is a positive integer; and
the spatial domain prior information of the residual information of the current frame comprises the prediction information of the current frame.

7. The method according to any one of claims 1 to 6, wherein the method is applied to an AI video encoding framework, and the AI video encoding framework comprises a motion estimation module, an entropy estimation module, an entropy encoding module, a prediction module, and a residual encoding module;
the motion estimation module is configured to perform motion estimation on the current frame, to obtain the first optical flow of the current frame;
the entropy estimation module is configured to: determine the first optical flow hyperprior information of the current frame based on the feature information of the first optical flow of the current frame and the prior information of the first optical flow of the current frame; and output the first optical flow hyperprior information of the current frame to the entropy encoding module;
the entropy encoding module is configured to encode the first optical flow hyperprior information of the current frame, to obtain the first bitstream;
the entropy estimation module is further configured to: perform probability estimation based on the second optical flow hyperprior information of the current frame and the prior information of the first optical flow of the current frame, to obtain the optical flow probability distribution of the current frame; and output the optical flow probability distribution to the entropy encoding module;
the entropy encoding module is further configured to perform entropy encoding on the feature information of the first optical flow of the current frame based on the optical flow probability distribution of the current frame, to obtain the second bitstream;
the prediction module is configured to: perform inter prediction on the current frame, to obtain the prediction information of the current frame; and output the prediction information of the current frame to the residual encoding module;
the residual encoding module is configured to determine the residual information of the current frame based on the prediction information of the current frame and the original picture of the current frame; and output the residual information of the current frame to the entropy encoding module; and
the entropy encoding module is further configured to encode the residual information of the current frame, to obtain the third bitstream.

8. A decoding method, wherein the method comprises:
receiving a bitstream, wherein the bitstream comprises a first bitstream, a second bitstream, and a third bitstream;
decoding the first bitstream, to obtain second optical flow hyperprior information of a current frame;
performing probability estimation based on the second optical flow hyperprior information of the current frame and prior information of a first optical flow of the current frame, to obtain an optical flow probability distribution of the current frame;
performing entropy decoding on the second bitstream based on the optical flow probability distribution of the current frame, to obtain feature information of a second optical flow of the current frame;
performing inter prediction based on the second optical flow of the current frame, to obtain prediction information of the current frame, wherein the second optical flow of the current frame is obtained by performing feature restoration based on the feature information of the second optical flow of the current frame;
obtaining decoded residual information of the current frame based on the third bitstream; and
performing reconstruction based on the prediction information of the current frame and the decoded residual information of the current frame, to obtain a reconstructed picture of the current frame.

9. The method according to claim 8, wherein
the prior information of the first optical flow of the current frame comprises at least one of time domain prior information of the first optical flow of the current frame or spatial domain prior information of the first optical flow of the current frame.

10. The method according to claim 9, wherein
the time domain prior information of the first optical flow of the current frame comprises feature information of a second optical flow of m frames prior to the current frame, wherein m is a positive integer; and
the spatial domain prior information of the first optical flow of the current frame comprises feature information of a reconstructed picture of a reference frame corresponding to the current frame.

11. The method according to any one of claims 8 to 10, wherein the bitstream further comprises a fourth bitstream, and obtaining the residual information of the current frame based on the third bitstream comprises:
decoding the fourth bitstream, to obtain second residual hyperprior information of the current frame;
performing probability estimation based on the second residual hyperprior information of the current frame and prior information of the residual information of the current frame, to obtain a residual probability distribution of the current frame; and
performing entropy decoding on the third bitstream based on the residual probability distribution of the current frame, to obtain the decoded residual information of the current frame.

12. The method according to claim 11, wherein
the prior information of the residual information of the current frame comprises at least one of time domain prior information of the decoded residual information of the current frame or spatial domain prior information of the decoded residual information of the current frame.

13. The method according to claim 12, wherein
the time domain prior information of the decoded residual information of the current frame comprises decoded residual information of n frames prior to the current frame, wherein n is a positive integer; and
the spatial domain prior information of the decoded residual information of the current frame comprises the prediction information of the current frame.

14. The method according to any one of claims 8 to 13, wherein the method is applied to an AI video decoding framework, and the AI video decoding framework comprises a motion estimation module, an entropy estimation module, an entropy decoding module, a prediction module, and a reconstruction module;
the entropy decoding module is configured to: decode the first bitstream, to obtain the second optical flow hyperprior information of the current frame; and output the second optical flow hyperprior information of the current frame to the entropy estimation module;
the entropy estimation module is configured to: perform probability estimation based on the second optical flow hyperprior information of the current frame and the prior information of the first optical flow of the current frame, to obtain the optical flow probability distribution of the current frame; and output the optical flow probability distribution to the entropy decoding module;
the entropy decoding module is further configured to perform entropy decoding on the second bitstream based on the optical flow probability distribution of the current frame, to obtain the feature information of the second optical flow of the current frame;
the prediction module is configured to: perform inter prediction based on the second optical flow of the current frame, to obtain the prediction information of the current frame; and output the prediction information of the current frame to the reconstruction module;
the entropy decoding module is configured to: obtain the decoded residual information of the current frame based on the third bitstream; and output the decoded residual information of the current frame to the reconstruction module; and
the reconstruction module is configured to perform reconstruction based on the prediction information of the current frame and the decoded residual information of the current frame, to obtain the reconstructed picture of the current frame.

15. An encoding method, wherein the method comprises:
performing inter prediction on a current frame, to obtain prediction information of the current frame;
determining residual information of the current frame based on the prediction information of the current frame and an original picture of the current frame;
determining first residual hyperprior information of the current frame based on the residual information of the current frame and prior information of the residual information of the current frame;
encoding the first residual hyperprior information of the current frame, to obtain a first bitstream;
performing probability estimation based on second residual hyperprior information of the current frame and prior information of the residual information of the current frame, to obtain a residual probability distribution of the current frame, wherein the second residual hyperprior information of the current frame is obtained through decoding based on the first bitstream; and
performing entropy encoding on the residual information of the current frame based on the residual probability distribution of the current frame, to obtain a second bitstream.

16. The method according to claim 11, wherein
the prior information of the residual information of the current frame comprises at least one of time domain prior information of the residual information of the current frame or spatial domain prior information of the residual information of the current frame.

17. The method according to claim 16, wherein
the time domain prior information of the residual information of the current frame comprises residual information of n frames prior to the current frame, wherein n is a positive integer; and
the spatial domain prior information of the residual information of the current frame comprises the prediction information of the current frame.

18. The method according to any one of claims 15 to 17, wherein the method is applied to an AI video encoding framework, and the AI video encoding framework comprises an entropy estimation module, an entropy encoding module, an inter prediction module, and a residual encoding module;
the inter prediction module is configured to: perform inter prediction on the current frame, to obtain the prediction information of the current frame; and output the prediction information of the current frame to the residual encoding module;
the residual encoding module is configured to: determine the residual information of the current frame based on the prediction information of the current frame and the original picture of the current frame; and output the residual information of the current frame to the entropy estimation module;
the entropy estimation module is configured to: determine the first residual hyperprior information of the current frame based on the residual information of the current frame and the prior information of the residual information of the current frame; and output the first residual hyperprior information of the current frame to the entropy encoding module;
the entropy encoding module is configured to encode the first residual hyperprior information of the current frame, to obtain the first bitstream;
the entropy estimation module is further configured to: perform probability estimation based on the second residual hyperprior information of the current frame and the prior information of the residual information of the current frame, to obtain the residual probability distribution of the current frame; and output the residual probability distribution to the entropy encoding module; and
the entropy encoding module is further configured to perform entropy encoding on the residual information of the current frame based on the residual probability distribution of the current frame, to obtain the second bitstream.

19. A decoding method, wherein the method comprises:
receiving a bitstream, wherein the bitstream comprises a first bitstream and a second bitstream;
decoding the first bitstream, to obtain second residual hyperprior information of a current frame;
performing probability estimation based on the second residual hyperprior information of the current frame and prior information of residual information of the current frame, to obtain a residual probability distribution of the current frame;
performing entropy decoding on the second bitstream based on the residual probability distribution of the current frame, to obtain decoded residual information of the current frame;
performing inter prediction on the current frame, to obtain prediction information of the current frame; and
performing reconstruction based on the prediction information of the current frame and the decoded residual information of the current frame, to obtain a reconstructed picture of the current frame.

20. The method according to claim 19, wherein
the prior information of the residual information of the current frame comprises at least one of time domain prior information of the decoded residual information of the current frame or spatial domain prior information of the decoded residual information of the current frame.

21. The method according to claim 20, wherein
the time domain prior information of the decoded residual information of the current frame comprises decoded residual information of n frames prior to the current frame, wherein n is a positive integer; and
the spatial domain prior information of the decoded residual information of the current frame comprises the prediction information of the current frame.

22. The method according to any one of claims 19 to 21, wherein the method is applied to an AI video decoding framework, and the AI video decoding framework comprises an inter prediction module, an entropy estimation module, an entropy decoding module, a prediction module, and a reconstruction module;
the entropy decoding module is configured to: decode the first bitstream, to obtain the second residual hyperprior information of the current frame; and output the second residual hyperprior information of the current frame to the entropy estimation module;
the entropy estimation module is configured to: perform probability estimation based on the second residual hyperprior information of the current frame and the prior information of the residual information of the current frame, to obtain the residual probability distribution of the current frame; and output the residual probability distribution to the entropy encoding module;
the entropy encoding module is configured to: perform entropy decoding on the second bitstream based on the residual probability distribution of the current frame, to obtain the decoded residual information of the current frame; and output the decoded residual information of the current frame to the reconstruction module;
the inter prediction module is configured to: perform inter prediction on the current frame, to obtain the prediction information of the current frame; and output the prediction information of the current frame to the reconstruction module; and
the reconstruction module is configured to perform reconstruction based on the prediction information of the current frame and the decoded residual information of the current frame, to obtain the reconstructed picture of the current frame.

23. An encoding apparatus, comprising:
a memory and a processor, wherein the memory is coupled to the processor; and
the memory stores program instructions, and when the program instructions are executed by the processor, the encoding apparatus is enabled to perform the method according to any one of claims 1 to 7 or any one of claims 15 to 18.

24. A decoding apparatus, comprising:
a memory and a processor, wherein the memory is coupled to the processor; and
the memory stores program instructions, and when the program instructions are executed by the processor, the decoding apparatus is enabled to perform the method according to any one of claims 8 to 14 or any one of claims 19 to 22.

25. A coding apparatus, comprising one or more interface circuits and one or more processors, wherein the one or more processors receive or send data through the one or more interface circuits, and when the one or more processors execute computer instructions, the steps of the method according to any one of claims 1 to 7 or any one of claims 15 to 18 are performed.

26. A coding apparatus, comprising one or more interface circuits and one or more processors, wherein the one or more processors receive or send data through the one or more interface circuits, and when the one or more processors execute computer instructions, the steps of the method according to any one of claims 8 to 14 or any one of claims 19 to 22 are performed.

27. A computer-readable storage medium, wherein the computer-readable storage medium stores a computer program, and when the computer program is run on a computer or a processor, the computer or the processor is enabled to perform the method according to any one of claims 1 to 22.

28. A computer program product, wherein the computer program product comprises computer instructions, and when the computer instructions are executed by a computer or a processor, the steps of the method according to any one of claims 1 to 22 are performed.
